(19) Europäisches Patentamt / European Patent Office / Office européen des brevets

(11) **EP 3 822 146 B1**

(12) **EUROPEAN PATENT SPECIFICATION**

(45) Date of publication and mention
of the grant of the patent:
**05.03.2025 Bulletin 2025/10**

(21) Application number: **19208868.0**

(22) Date of filing: **13.11.2019**

(51) International Patent Classification (IPC):
*B61L 15/00* (2006.01)      *B61L 27/00* (2022.01)
*H04L 12/40* (2006.01)      *B61L 27/40* (2022.01)
*B61L 27/70* (2022.01)

(52) Cooperative Patent Classification (CPC):
**B61L 15/0036; B61L 15/0072; B61L 27/40;
B61L 27/70; H04L 12/40045**

(54) **REDUNDANT HALF-DUPLEX FIELDBUS COUPLER, HALF-DUPLEX FIELDBUS NETWORK, MULTIFUNCTION VEHICLE BUS, RAILWAY VEHICLE WITH A MULTIFUNCTION VEHICLE BUS, RAILWAY TRAIN, AND RAILWAY SIGNAL CONTROL SYSTEM**

REDUNDANTER HALBDUPLEX-FELDBUSKOPPLER, HALBDUPLEX-FELDBUSNETZWERK, MULTIFUNKTIONALER FAHRZEUGBUS, EISENBAHNFAHRZEUG MIT MULTIFUNKTIONALEM FAHRZEUGBUS, EISENBAHNZUG UND EISENBAHNSIGNALSTEUERUNGSSYSTEM

COUPLEUR DE BUS DE TERRAIN SEMI-DUPLEX REDONDANT, RÉSEAU DE BUS DE TERRAIN SEMI-DUPLEX, BUS DE VÉHICULE MULTIFONCTION, VÉHICULE FERROVIAIRE COMPORTANT UN BUS DE VÉHICULE MULTIFONCTION, TRAIN FERROVIAIRE ET SYSTÈME DE COMMANDE DE SIGNAUX FERROVIAIRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**19.05.2021 Bulletin 2021/20**

(73) Proprietor: **ALSTOM Holdings
93400 Saint-Ouen-sur-Seine (FR)**

(72) Inventor: **Schweizer, Ulrich
10439 Berlin (DE)**

(74) Representative: **Zimmermann & Partner
Patentanwälte mbB
Postfach 330 920
80069 München (DE)**

(56) References cited:
**EP-A1- 1 067 036      WO-A1-98/59464
US-B2- 7 944 818**

**Description**

Technical Area

The present invention pertains to a half-duplex fieldbus coupler and to a half-duplex filedbus network. The invention also pertains to a multifunction vehicle bus , a railway vehicle, a railway train, railway signal control system, and a method for operating a half-duplex fieldbus coupler.

Background

Fieldbus systems are industrial networks for providing a data link between sensors and actuators and with at least one bus master or controller. Such networks allow communication between different devices over long distances and enables expanding the network by adding further devices. Each fieldbus system includes at least one bus master, or controller, which controls the other devices, which are referred to as slaves.

The physical structure of a fieldbus system is organized according to a given topology. Examples are line connection, which is often referred to as bus, a star connection, or a ring connection. In addition to the "physical layer", each fieldbus system has its own protocol which defines the way how the devices communicate with each other.

Fieldbus systems play, for example, an important role in the data communication of railway vehicles and trains, and also in other fields such as railway signalling and controlling. A railway train includes at least one, typically a plurality of railway wagons or railway carriages, which can be powered, i.e. self-propelled, or unpowered. In the following, powered and unpowered railway wagons and railway carriages including locomotives are referred to as railway vehicles. Devices installed in one railway vehicle are connected through a so-called multifunction vehicle bus (MVB) which can be limited to a single railway vehicle or which can extend to further railway vehicles depending on the total length of the train. Alternatively, each railway vehicle can include its own MVB, and the MVBs of the railway vehicles are connected with each other through nodes of a train bus. Other fieldbus systems are WTB, PROFIBUS and CANbus.

Railway vehicles of different types can communicate over the train bus and the MVBs coupled to the train bus for the purpose of controlling, diagnostics and passenger comfort. For example, distributed traction requires a real-time traction control. Fieldbus systems provide for such real-time control since they are fast and reliable. The capabilities of the fieldbus system are also exploited for diagnostic purposes by connecting various sensors and other diagnostic equipment with the fieldbus system. Information data can also be transmitted over the fieldbus, for example to present information to the passengers such as expected arrival time at the next station, possible delays, and available connecting trains.

MVBs are typically realised as fieldbus system in bus topology as it allows easy expansion of the network and takes account of the physical structure of railway vehicles and trains which can expand over several tens to hundreds meters. Although MVBs are typically wire-based networks it would in principle also be possible to use other media such as wireless communication and glass fibres. However, wire-based network is typically more robust and therefore the first choice in railway communication.

For reliability reasons, the data network of the train or railway vehicle has a redundant design and typically includes two parallel channels each of which is connected to a respective bus master and one or more slaves. Although this already improves reliability and availability of the network, further attempts have been made to restore redundancy in case of any malfunction, such as line interruption, in one of the two channels. An example is given in EP 2 088 685 B1 which discloses an information transmission system for a train. The information transmission system includes two transmission lines each comprising several hubs which provides connection to transmission terminals. The transmission terminals are connected to respective hubs of both transmission lines. In case of an interruption in any of the transmission lines data can be routed from the unaffected transmission line through the hubs and the transmission terminals to the interrupted transmission line so that redundant data flow can be maintained beyond the point of interruption. This solution, however, requires adaptation of the transmission terminals as these need to be capable of routing data. Furthermore, this system is not a fieldbus suitable for trains. It also does not comprise the half-duplex transmission of fieldbus systems.

A fieldbus system with shared redundancy system is disclosed in WO 2007/012886 A1. The main purpose of the shared redundancy system is to provide a redundant power supply for each trunk of the fieldbus system.

A further fieldbus system with two redundant channels is disclosed in DE 202 01 249 U1. The fieldbus system includes a plurality of multi-port repeaters each having two in-ports and two out-ports (like a standard coupler with channel-redundancy) but with a 5th port to a non-redundant device. During operation, the multiport repeaters listen on all ports. If a start bit flank is identified on one of the ports, all other ports are switched to transmission mode. This may lead to data corruption if delayed signals are being sent by another multiport repeater. In addition, the design has UART character delay (8...11bit times), which is too much delay for many fieldbus standards (MVB, WTB, and CAN).

A further example of a fieldbus system is disclosed in EP 1 089 190 A2 which describes coupling of a redundant data bus with a non-redundant data bus. A redundant serial bus is described in WO 98/59464 A1.

US 7 944 818 B2 describes a communication system for reliable communication between communication stations using redundant communication channels and fieldbus couplers. A communication and control system for railbound vehicles is described in EP 1 067 036 A1 using a coupling device for coupling two bus segments. WO 98 / 59464 A1 describes a redundant serial bus.

The above approaches address some aspects of maintaining or restoring of redundancy. However, they either require additional hardware or lead to additional issues such as data integrity.

Summary of the Invention

The invention is by the features of the independent claims.

Accordingly, a redundant half-duplex fieldbus coupler is provided for bi-directionally coupling two half-duplex fieldbus segments each having a first half-duplex signal channel segment and a second half-duplex signal channel segment redundant to one another (for simultaneous data transmission). The fieldbus coupler includes two transceiver units, wherein a respective one of the two transceiver units is connected with a respective one of the two channel segments of one of the two fieldbus segments. The fieldbus coupler includes two further transceiver units, wherein a respective one of the two further transceiver units is connected with a respective one of the two channel segments of the other one of the two fieldbus segments. Each transceiver unit includes a receiver to receive data from the respective channel segment to which the respective transceiver unit is connected and a transmitter to transmit data to the respective channel segment to which the respective transceiver unit is connected. The fieldbus coupler further includes a decider unit, or a plurality of decider units, configured to detect if any one of the two channel segments of any one of the two fieldbus segments is defective, which defective channel segment renders the fieldbus segment defective, and, if a defective fieldbus segment having a defective channel segment is detected, to cause that the receiver of the transceiver unit, which is connected to the defective channel segment of the defective fieldbus segment, is decoupled from the transmitter of the transceiver unit, or of any transceiver unit, which is connected to the corresponding channel segment of the other fieldbus segments, and to cause that the receiver of the transceiver unit, which is connected to the intact channel segment of the defective fieldbus segment, is coupled with the transmitter of both transceiver unis of the other fieldbus segments.

The decider unit is capable of detecting a defect in a fieldbus segment such as a defect in a channel segment of that fieldbus segment. For example, a channel segment might be interrupted or a device connected to that channel segment of that fieldbus segment might be malfunctioning. A malfunction of a channel segment (a "defective channel segment") leads to an at least partial malfunction in the fieldbus segment ("defective fieldbus segment") having the defective channel segment, mainly because one of the two channel segments does not work properly. Hence, the redundancy provided by that fieldbus segment is affected or lost.

Based on the detection of a defective channel segment, the fieldbus coupler is configured to connect selectively the transceiver unit, which is coupled to the intact, i.e. not defective, channel segment of the defective fieldbus segment, with each transceiver units of the other fieldbus segment. More specifically, the receiver of the transceiver unit, which is coupled to the not defective channel segment of the defective fieldbus segment, is coupled to the transmitter of each transceiver units of the other fieldbus segment.

It is therefore possible that data telegrams received from the intact channel segment of the defective fieldbus segment can be transmitted to both channel segments of the other fieldbus segment, so that the redundancy of data communication in the other fieldbus segment is maintained although one channel segment of the defective fieldbus segments failed. This improves the reliability of a communication network employing the coupler. The influence of a hardware error such as broken wire or a short circuit is therefore limited to the fieldbus segment in which this hardware error occurred.

For example, the coupler is provided to couple a first fieldbus segment with a second fieldbus segment, each having two channel segments denoted by a1, b1, a2, b2, respectively. The coupler couples the channel segment a1 of the first fieldbus segment with the channel segment a2 of the second fieldbus segment, and the channel segment b1 of the first fieldbus segment with the channel segment b2 of the second fieldbus segment. In a normal mode of operation, i.e. when no malfunction or line interruption occurs, the "a" channel segments are coupled with each other and the "b" channel segments are coupled with each other through the coupler to provide two channels redundant to each other. However, the "a" channel segments are not coupled to the "b" channel segments during normal mode of operation. Thus, in normal mode of operation an "a" channel is formed by the "a" channel segments and a "b" channel is formed by the "b" channel segments, wherein each fieldbus segment has an "a" channel segment and a "b" channel segment. The "a" channel and the "b" channel are independent from each other. The "a" channel and the "a" channel segments can also be referred to as first channel and first channel segments, respectively, while the "b" channel and the "b" channel segments can also be referred to as second channel and second channel segments, respectively.

Different to the normal mode of operation is a redundancy-restoring mode of operation, where a switching between the channels is provided by the coupler. Details of this redundancy-restoring mode of operation are described further below.

Since the fieldbus is a half-duplex field bus, data can, at a given time, either be transmitted in one direction, such as from channel segment a1 to channel segment a2 (or from channel segment b1 to channel segment b2), or in the other direction such as from channel segment a2 to channel segment a1 (or from channel segment b2 to channel segment b1). The data transmission is therefore bi-directional but an actual transmission at a given time is only possible in one of the two data transmission directions (time multiplex). With respect to the actual direction of data transmission, one channel segment is "upstream" to the other channel segment meaning that the data is transmitted from the upstream channel segment to the downstream channel segment with the coupler coupling the upstream channel segment with the downstream channel segment. Note that upstream and downstream change with the actual direction of the data transmission.

The coupler according to embodiments described herein is provided with additional functionality to detect an error in any of the currently upstream channel segments for a given data transmission direction. In normal mode of operation, data telegrams are transmitted in both channels ("a" and "b"), and the coupler receives data telegrams from the respective upstream channel segments and independently transmits the received data telegrams to the respective downstream channels segments. If an error, such as an electrical failure, occurs in any of the upstream channel segments, the coupler detects that no data or defective data is received from that upstream channel segment and identifies this upstream channel segment as being defective. The upstream fieldbus segment having this defective channel segment is thus considered to be defectives since the redundancy of this fieldbus segment is impaired.

If no measures would be taken, the coupler would only transmit downstream data to that channel segment which is coupled with the intact upstream channel segment. Since no or defective data telegrams are received from the defective upstream channel segment, the coupler would not transmit anything, or only defective data telegrams, to the downstream channel segment coupled with the defective upstream channel segment.

The coupler of embodiments described herein is provided, in addition to the functionality of identifying an error in the upstream channel segment, with the functionality to decouple the defective upstream channel segment from its associated downstream channel segment, and to couple the intact upstream channel segment with both downstream channel segments so that the data telegrams received by the coupler from the intact upstream channel segment are routed to both downstream channel segments. This restores redundancy in the downstream fieldbus segments and any further following downstream fieldbus segments.

Hence, the coupler is operable to control switching between the channel segments in case of a detected error in any of the channel segments (redundancy-restoring mode of operation) while maintaining the channels separate if no error occurs (normal mode of operation). The switching occurs in downstream direction of the data transmission, i.e. a data telegram is transmitted from the intact upstream channel segment to both downstream channel segments. In the opposite direction, i.e. if a data telegram is to be transmitted in the opposite direction, the coupler may transmit the data telegram to the defective channel segment, which is for this data telegram a downstream channel segment. The redundancy may then be restored by the next coupler in downstream direction relative to the transmission direction for this particular data telegram.

According to an embodiment, the decider unit includes at least one decider to compare signals representing data transmission received by the respective transceiver unit from the two channel segments (first and second channel segments) of the one fieldbus segments, and at least one decider to compare signals representing data transmission received by the respective transceiver unit from the two channel segments (first and second channel segments) of the other fieldbus segment. Since the data transmission direction changes depending on the data traffic, one of the fieldbus segments with its two channel segments is for a given data transmission direction either an upstream fieldbus segment with upstream channel segments, or a downstream fieldbus segment with downstream channel segments. For that reason, the coupler is provided with deciders for both data transmission directions.

For example, the signals which are compared can be signals indicating that a data telegram has been completely received. If such signals are only received from one of the two upstream channel segments, the decider decides, according to specific criteria, that the upstream channel segment from which no or significantly less signals are received, is defective. Any defect which causes an interruption of data transmission is detectable. The decider then causes the transceiver unit of the defective channel segment to be decoupled from its associated transceiver unit of the other fieldbus segment, and causes the transceiver unit of the intact channel segment of the defective fieldbus segment to be coupled to each of the transceiver units of the other fieldbus segment. More specifically, the receiver (or receiver port) of the transceiver unit coupled with the defective channel segment is decoupled from the transmitter (or transmitter port) of the associated transceiver unit of the other fieldbus segment. Furthermore, the receiver (or receiver port) of the transceiver unit of the intact channel segment of the defective fieldbus segment is coupled to each of the respective transmitter (or transmitter port) of the transceiver units of the other fieldbus segment.

The signals which are compared by the respective deciders can be signals which are derived from the received data telegrams, such as a signal indicating that a complete data telegram has been received. Alternatively, the signals compared by the respective deciders can be the data telegrams. It is not important what type of signals is compared as long as the signals are representative for the data transmission in the respective channel segments.

According to an embodiment, the decider unit includes at least one decider for each channel segment. The decider unit can thus be formed by four deciders. When considering the data transmission direction, a respective decider can be assigned to a respective transceiver of an upstream channel segment and receives signals associated with the received data telegrams from both upstream channel segments. The decider judges whether both upstream channel segments work properly or whether an error has occurred in one of the two upstream channel segments. If no error occurred, then the decider maintains the normal mode of operation, i.e. maintains coupling between corresponding upstream and downstream channel segments. If an error occurred, the decider decouples the defective upstream channel segment from the corresponding downstream channel segment, and couples the intact upstream channel segment with both downstream channel segments.

According to an embodiment, the actual coupling and decoupling can be performed by respective switching units which are operated by the respective deciders. The respective switching units can include two input ports and an output port. The output port can be connected to the transmitter, or transmitter port, of the transceiver unit with which the respective switching unit is associated. The input ports are coupled, for example through buffers or refresh circuits, with the receivers, or receiver ports, of both transceivers of the "upstream" channel segments. Depending on a control signal received from the respective decider, the switching unit either couples the transmitter with the receiver of the transceiver of the same upstream channel segment (coupling of "a" channel segments with each other or of "b" channel segments with each other, respectively) or with the receiver of the transceiver of the other upstream channel segment (coupling of an "a" channel segment with a "b" channel segment or of a "b" channel segment with an "a" channel segment).

Since the decider unit can include four deciders, any of the possible data routing can be performed independently from other possible data routing. In normal mode of operation, channel segment a1 is coupled with channel segment a2, and channel segment b1 is coupled with channel segment b2. Depending on where an error occurred and in which direction the current data transmission flows, channel segment a1 is coupled with channel segments a2 and b2 in case of an error in upstream channel segment b1, channel segment b1 is coupled with channel segments a2 and b2 in case of an error in upstream channel segment a1, channel segment a2 is coupled with channel segments a1 and b1 in case of an error in upstream channel segment b2, and channel segment b2 is coupled with channel segments a1 and b1 in case of an error in upstream channel segment a2.

According to an embodiment, the respective decider for a given channel segment is configured to detect the presence or absence of signals representing, for example, the receipt of a complete data telegram, and to increase a counter signal, or to register error events, if a data telegram is not or incompletely received from that channel segment relative to the other channel segment. The counter is used as parameter for deciding when a switch-over of the channels shall occur. For example, if the counter exceeds a given threshold, the respective switching uniting switches between the channels. Using a given value for the threshold prevents that switching is activated if only a transient error occurs. This improves the stability of the data communication.

It is thus possible to prevent a switch-over in case of a single defective data telegram. Hence, a channel segment is rated to be defective, or having a "failure condition", if the number of single defects, such as defective data telegrams, exceeds a given threshold (typically a plurality of defective data telegrams).

According to an embodiment, the coupler further includes one or more indicators for indicating whether a defect occurred in any one of the two channels of any one of the two fieldbus segments. This can indicate a normal operation-mode (no defect) or a redundancy-restoring mode of operation (channel segment in which a defect is detected is decoupled). The indicator can be, for example, an optical light element for optically indicating by emitting a light signal that a given channel segment of a given fieldbus segment is decoupled. Since the switching from normal mode to the redundancy-restoring mode typically occurs only after a certain amount of defective data telegrams are identified (number of defective data telegrams exceeds a given threshold), the one or more indicators can also be used, according to an embodiment, to signal a warning that irregularities (defects) occurred which, however, have not exceeded a given threshold. Alternatively, the indicator can be an acoustic element for acoustically indicating by emitting an acoustic signal that a given channel segment of a given fieldbus segment is defective. It is further possible that two types of different indicators are provided, for example to acoustically and optically indicating the defective channel segment.

According to an embodiment, the coupler includes a transmitting unit for transmitting a data telegram on the fieldbus indicating that a defect occurred in one of the channels of the fieldbus segments. The coupler is thus not only a passive element for merely coupling fieldbus segments which each other and routing data telegrams, but also includes active components such as the transmitting unit to send a data telegram describing, or being representative of, the defect so that this information is transmitted to other participants of the fieldbus network and can be noted by an operator. Alternatively, the coupler can include an interface to an integrated fieldbus-device for diagnostic information. Here, the coupler can provide all relevant information as a participant of the bus. These are the modes (normal / decoupled) of all four channel segments. This has an enormous advantage for troubleshooting, since the typically transparent coupler (transparent in the sense that the coupler merely route the signals but do not alter or process the data) is "invisible" to the central controller, and the cause of defective telegrams cannot be localized. Similar to indicating an error, existing information about error status (error counter) or internal errors can be provided cyclically. Depending on the bus system, error diagnostics or alarm mechanisms can be implemented in the coupler or in the integrated fieldbus-device for diagnostic information.

According to an embodiment, a half-duplex fieldbus network includes at least two half-duplex fieldbus segments, each having a first half-duplex channel segment and a second half-duplex channel segment redundant to one another. The half-duplex fieldbus network further includes at least one redundant half-duplex fieldbus coupler connected to the fieldbus segments to couple the respective channel segments of the two fieldbus segments. The fieldbus coupler is configured to detect a defect, or failure condition, in any of the channel segments of the two fieldbus segments to which the fieldbus coupler is connected by comparing the signals received from both channel segments of a respective fieldbus segment, and, if a defect occurred in one of the channel segments of one of the two fieldbus segments, to transmit the signal from the other channel of the fieldbus segments in which the failure has occurred to both channel segments of the other one of the fieldbus segments.

According to an embodiment, the half-duplex fieldbus network includes a plurality of redundant half-duplex fieldbus couplers and a plurality of half-duplex fieldbus segments, each having a first half-duplex signal channel segment and a second half-duplex signal channel segment redundant to one another, wherein the redundant half-duplex fieldbus couplers and the half-duplex fieldbus segments are alternatingly sequentially connected.

According to an embodiment, a multifunction vehicle bus includes at least one redundant half-duplex fieldbus coupler as described herein. The multifunction vehicle bus can include at least two half-duplex fieldbus couplers, or at least three half-duplex fieldbus coupler. Each of the half-duplex fieldbus couplers couples two half-duplex fieldbus segments each having a first channel and a second channel redundant to each other.

According to an embodiment, a railway vehicle includes a multifunction vehicle bus as described herein.

According to an embodiment, a railway train includes at least two railway vehicles as described herein, wherein the multifunction vehicle bus of each railway vehicle is coupled by a wire train bus of the train.

According to an embodiment, a method for operating a half-duplex fieldbus coupler, which bi-directionally couples two half-duplex fieldbus segments each having a first half-duplex channel segment and a second half-duplex channel segment redundant to one another, is provided. The fieldbus coupler includes two transceiver units, wherein a respective one of the two transceiver units is connected with a respective one of the two channel segments of one of the two fieldbus segments, and two further transceiver units, wherein a respective one of the two further transceiver units is connected with a respective one of the two channel segments of the other one of the two fieldbus segments. Each transceiver unit includes a receiver to receive data from the respective channel segment to which the respective transceiver unit is connected and a transmitter to transmit data to the respective channel segment to which the respective transceiver unit is connected. The method includes: monitoring the two channel segments of any one of the two fieldbus segments to identify if any of the two channel segments is defective which would therefore render the fieldbus segment defective; and causing, if a defective fieldbus segment having a defective channel segment is identified, decoupling the receiver of the transceiver unit, which is connected to the defective channel segment of the defective fieldbus segment, from the transmitter of the transceiver unit which is connected to the corresponding channel segment of the other fieldbus segments, and coupling the receiver of the transceiver unit, which is connected to the intact channel segment of the defective fieldbus segment, with the transmitter of both transceiver unis of the other fieldbus segments.

By monitoring the "paired" channel segments (first and second channel segment of the same fieldbus segment), defects in any of the two paired channel segments can be detected. This allows the coupler to selectively decouple the defective channel segment, depending on the data transmission direction, from further transmission, and to selectively coupling the not-defective channel segment with both channel segments of the other fieldbus segment.

According to an embodiment monitoring the two channel segments includes comparing signals representing data transmission received by the respective transceiver unit from the first and second channel segments of the one fieldbus segments by at least one decider; and identifying one of the first and second channel segments as being defective, if no signals or significantly less signals are received for that channel segment.

Comparing the data stream received from the two "paired" channel segments provides for an easy identification of defect. The comparison can be performed as described above, such as by comparing the number of received "complete signals", whereas a channel segment is rated to be defective if no or significantly less signals are received from this channel. The switching is initiated if the difference between the signals (complete signals) exceeds a given first threshold. Back-switching, as described further above, is performed if the difference reduces to a second threshold lower than the first threshold.

According to an embodiment, the coupling and decoupling of the respective receivers is performed by respective switching units which receives switching signals issued by the at least one decider. This can be done as described above.

Furthermore, any of the functionality provided by the coupler can be embodiment by software implementation using specific programmable integrated circuits, or by specifically configured integrated circuits such as PLDs (CPLDs or FPGAs) or μControllers.

According to an embodiment, a railway signal control system having at least two control devices includes a fieldbus network as described above. The fieldbus network connects the control devices with each other, and optionally also with a bus master for controlling the control devices. The control devices can be signal devices such as railway signals, devices to control sensors and to receive sensor output, and/or devices to control actuators such as points. According to an embodiment, one of the at least two control devices is a signal device and the other one of the at least two control devices is a device to control an actuator. According to an embodiment, the railway signal control system includes at least three control devices, which include a signal device, a device to control an actuator, and a device to control a sensor.

Brief Description of the Drawings

In the following, various embodiments are described without being limited thereto.

Figure 1A illustrates the operation of a half-duplex fieldbus network having half-duplex couplers according to embodiments described herein when a single defect occurs in any of the channels of the fieldbus network. Figure 1B illustrates how the defect is transmitted if couplers without the switching capability as described herein are used.

Figure 2A illustrates the operation of a half-duplex fieldbus network having half-duplex couplers according to embodiments described herein when two defects in different channels of different fieldbus segments occur. Figure 2B illustrates how the defects lead to a complete failure of the network if couplers without the switching capability as described herein are used.

Figure 3 illustrates a fieldbus coupler according to an embodiment where the switching occurs after signal processing of the received data telegrams.

Figure 4 illustrates a fieldbus coupler according to an embodiment where the switching occurs before the signal processing of the received data telegrams.

Figure 5 illustrates a fieldbus coupler according to a generic embodiment.

Figure 6 illustrates a fieldbus coupler with redundant deciders according to an embodiment.

Figure 7 illustrates the temporal behaviour of various signals including the complete signals and the counter signal for the situation that no error occurs and for the situation that an error occurs.

Figure 8 illustrates a logic circuit which can be used for the decider of a coupler according to an embodiment.

Figure 9 illustrates a further logic circuit which can be used for the decider of a coupler according to an embodiment.

Figure 10 illustrates another logic circuit which can be used for the decider of a coupler according to an embodiment.

Figure 11 illustrates the generation of the counter according to an embodiment.

Figure 12 illustrates the handling of an interruption of a channel segment which occur close to the coupler.

Figure 13 illustrates the handling of a short circuit of a channel.

Figure 14 illustrates the handling of an interruption of a channel segment which occurs more remote to the coupler.

Figure 15 illustrates the handling of an interruption of a line segment connecting a slave with the fieldbus.

Figure 16 illustrates the handling of an interruption of a line segment connecting a bus master with the fieldbus.

Figure 17 illustrates a further fieldbus coupler according to an embodiment.

Figure 18 illustrates a fieldbus network having fieldbus couplers with indicators for indicating a defect according to an embodiment.

Figure 19 illustrates a fieldbus coupler with indicators according to an embodiment.

Figure 20 illustrates a full-duplex repeater.

Figures 21 and 22 illustrate a standard half-duplex coupler.

Figure 23 illustrates a railway train with a plurality of railway vehicles.

Figure 24 illustrates a railway signal control system.

<u>Detailed Description</u>

As used herein, the terms "downstream" and "upstream" intend to describe the position of one device relative to another device in the fieldbus relative to the current data flow.

A half-duplex fieldbus network allows transmission of data telegram in both directions. However, different to full-duplex fieldbus networks, the half-duplex fieldbus network can transmit data telegrams only in one direction at a given time. This means that a participant of the network, for example a slave, can either transmit data telegrams or can receive ("listen") data telegrams since at each time the network can transmit data telegrams only in one direction.

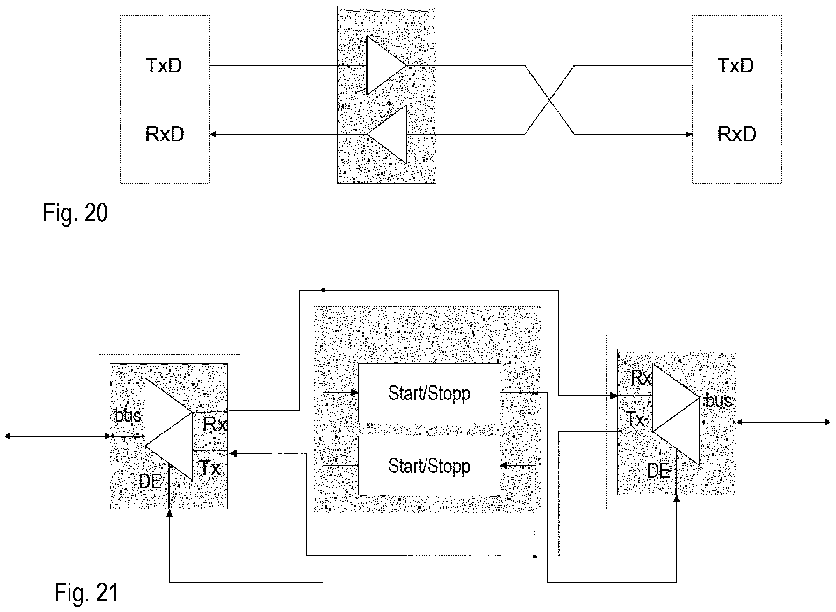

Figure 20 shows a full-duplex repeater for connecting two full-duplex channels. Each channel has two lines, one for each data transmission direction.

Different thereto, a half-duplex coupler couples two single channels which alternatively transmit data telegrams in different directions. For that reasons, the half-duplex coupler has an internal logic to ensure that transmission occurs at a given time only in one direction. Figure 21 illustrates an example of a half-duplex coupler having two transceivers each connected with a respective one of the two channels. Each transceiver has a receiver Rx for receiving data telegrams from the channel (indicated by "bus") and a transceiver for transmitting data telegrams to the channel (or the "bus").

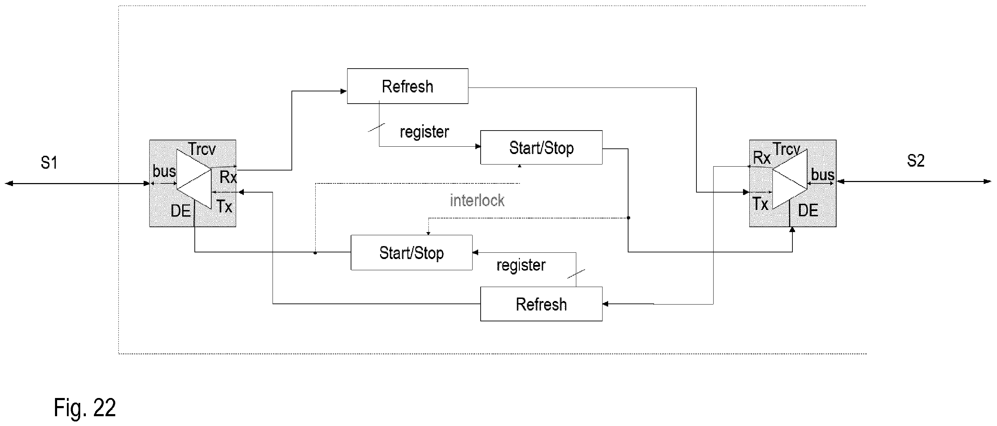

A more detailed illustration of a standard half-duplex coupler is shown in Figure 22. If a data telegram is received from one of the transceivers Trcv, for example the transceiver Trcv coupled with the fieldbus segment S1, the internal logic locks any internal transmission from the other transceiver so that the signal received from the fieldbus segment S1 can be transmitted to the transceiver coupled to the fieldbus segment S2 without any interference transmission in the opposite direction. More specifically, the internal logic couples the receiver Rx of the transceiver coupled with the fieldbus segment S1 with the transmitter Tx of the transceiver coupled with the fieldbus segment S2. At the same time, a drive enable signal DE is transmitted to the transceiver coupled with the fieldbus segment S2 so that this transceiver is active. The other transceiver, i.e. the transceiver coupled with the fieldbus segment S1, does not get a drive enable signal DE and is therefore not operable to transmit any data telegram to the fieldbus segment S1.

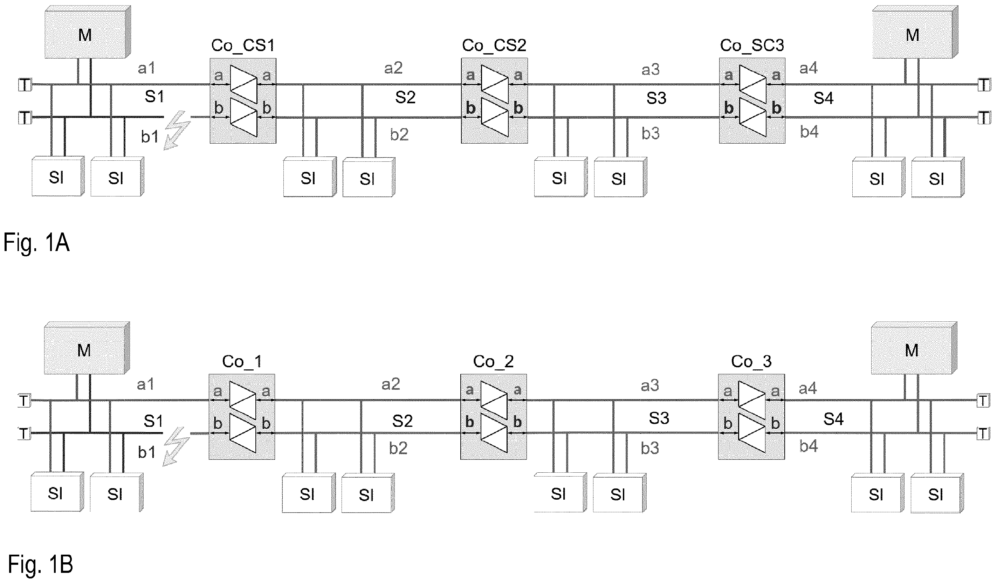

Figure 1 exemplarily illustrates a defect, which occurs in a channel segment of a fieldbus network and which is handled using a coupler Co_SC1, Co_CS2, Co_CS3 as described herein. The illustrative half-duplex fieldbus network includes a plurality of fieldbus segments S1, S2, S3, S4 each having a channel segment indicated by a1, a2, a3, a4, b1, b2, b3, and b4, respectively. The channel segments a1, a2, a3, a4 form together a first channel ("a" channel) and the channel segments b1, b2, b3, b4 form together a second channel ("b" channel). Both channels are redundant to each other and the respective coupler Co_CS1, Co_CS2, Co_CS3 couples a respective pair of channel segments with another pair of channel segments.

A plurality of slaves SI is coupled with the channel segments, wherein each of the slaves SI is coupled with both channels. Furthermore, two bus masters M (or simply masters) are coupled with the two channels.

Figure 1A illustrates a line interruption in channel segment b1. This means that data telegrams transmitted by the slaves SI or the master M coupled to the channel segment b1 "upstream" of the line interruption are not received by the coupler So_CS1. Thus, the redundancy of the fieldbus network is corrupted. To restore redundancy, the coupler Co_CS1 is operable (brought into the redundancy-restoring mode of operation) to transmit data telegrams received from channel segment a1 to both channel segments a2 and b2 so that in the downstream fieldbus segments S2 the redundancy is restored.

This is in contrast to the situation where commonly known half-duplex couplers Co_1, Co_2, Co_3 are used. The situation is shown in Figure 1B where the defect of channel segment b1 is "transmitted" to any of the downstream channel segments b2, b3, and b4, for data transmission from the fieldbus segment S1 to the fieldbus segment S2 onwards, since none of the couplers Co_1, Co_2, Co_3 is capable of performing a channel switching.

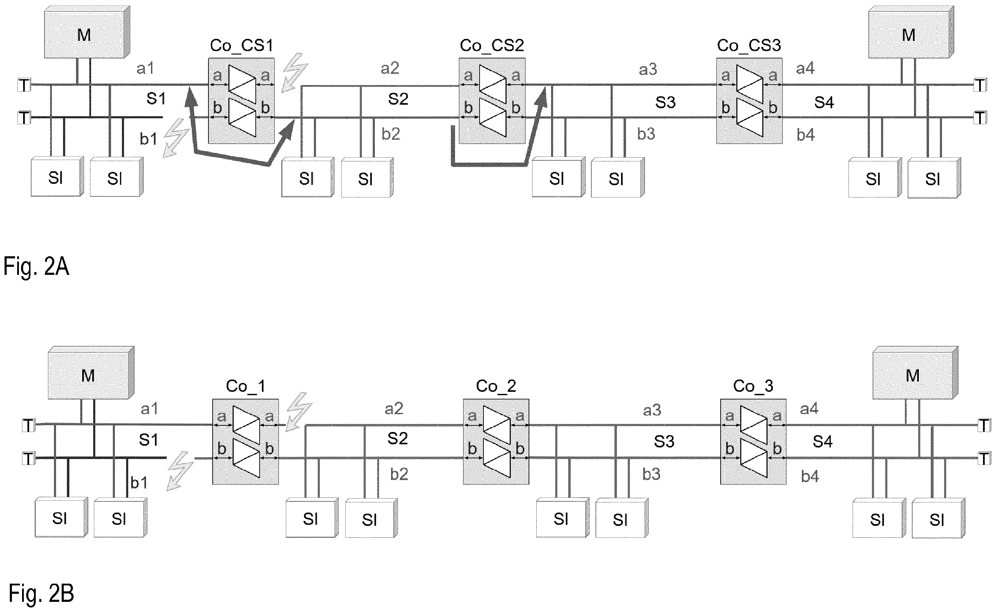

The advantages of the fieldbus coupler as described herein become even more apparent when considering the situation illustrated in Figures 2A and 2B. Herein, a defect such as a line interruption in channel segment b1 and an interruption in channel segment a2 is illustrated. In a downstream direction for data telegrams from the fieldbus segment S1 to the fieldbus segment S2 the coupler Co_CS1 transmits the data telegram from channel segment a1 to both channel segments a2 and b2, even if the channel segment a2 has a line interruption as well. The next coupler Co_CS2 in downstream direction then detects that a defect (interruption) occurs in channel segment a2 and couples the channel segment b2 with both channel segments a3 and b3 of the fieldbus segment S3 to fully restore the redundancy.

Moreover, for data transmission in the opposite direction from fieldbus segment S2 to fieldbus segment S1, channel segment a2 is upstream relative to channel segment a1. The coupler Co_CS1 is capable for detecting the defect in the channel segment a2 for this direction of data transmission and routes the data telegrams received from unaffected upstream channel segment b2 to both downstream channel segments a1 and b1 so that communication is possible via channel b2 of segment S2.

Different thereto, prior art half-duplex field bus couplers Co_1, Co_2, Co_3 do no provide this functionality as illustrated in Figure 2B. Hence, a line interruption in channel segment b1 as well as in channel segment a2 results in a complete loss of data transmission from fieldbus segment S1 to fieldbus segments S2, S3, and S4. This is illustrated for the data transmission direction from fieldbus segment S1 to fieldbus segment S2, where the data telegrams sent by the slaves SI coupled to the fieldbus segment S1 are not transmitted to the fieldbus segment S2, S3 and S4.

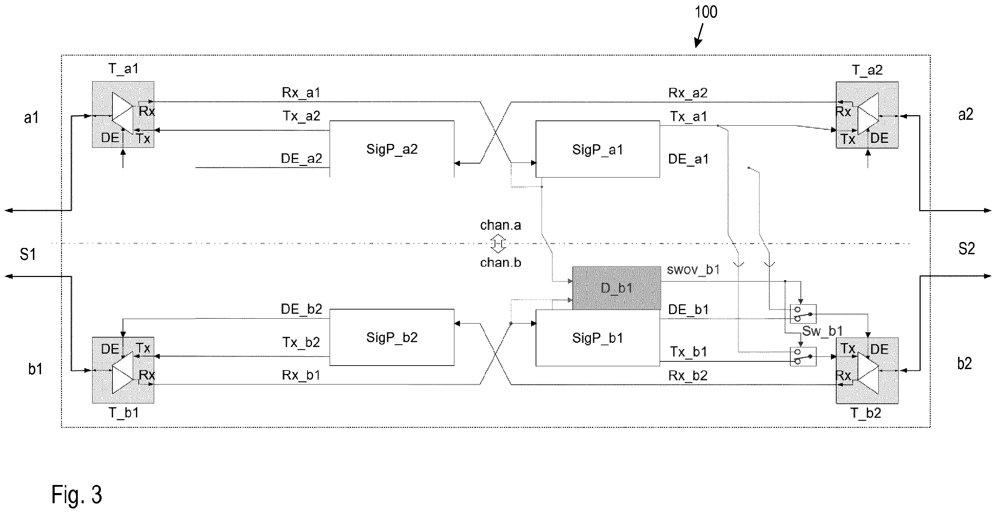

Figure 3 illustrates, according to an embodiment, a redundant half-duplex fieldbus coupler 100, hereinafter simply referred to as coupler, where the switching occurs after signal processing of received data telegrams. The coupler 100 is specifically designed to couple bi-directionally two half-duplex fieldbus segments S1 and S2, hereinafter simply referred to as fieldbus segments S1 and S2. Each fieldbus segment S1, S2 has a first bi-directional channel segment a1, a2 and a second bi-directional channel segment b1, b2 redundant to one another. The fieldbus segments can be embodied as wire or cable sections which form the physical carrier medium for the logical channels. For a typical fieldbus, a plurality of fieldbus segments are coupled by respective couplers wherein a respective one of the coupler couples two fieldbus segments adjacent in a line to form a bus topology.

The coupler 100 includes two transceiver units T_a1, T_b1 each connected with a respective one of the two channel segments a1, b1 of fieldbus segment S1, and two further transceiver units T_a2, T_b2 each connected with a respective one of the two channel segments a2, b2 of the other fieldbus segment S2. Each transceiver unit T_a1, T_b1, T_a2, T_b2 includes a receiver Rx to receive data (data telegrams) from the respective channel segment a1, b1, a2, b2 to which the respective transceiver unit T_a1, T_b1, T_a2, T_b2 is connected, and a transmitter Tx to transmit data to the respective channel segments a1, b1, a2, b2 to which the respective transceiver unit T_a1, T_b1, T_a2, T_b2 is connected.

For ease of explanation, the fieldbus segment S1 is referred to as first fieldbus segment S2, the fieldbus segment S2 is referred to as second fieldbus segment S2, the channel segments a1, a2 denoted with an "a" are referred to as first channel segments a1, a2, the channel segments b1, b2 denoted with an "b" are referred to as second channel segments a2, b2, wherein the channel formed by the first channel segments a1, a2 is referred to as first channel and the channel formed by the second channel segments b1, b2 is referred to as second channel.

The receiver Rx and transmitter Tx of each transceiver unit T_a1, T_b1, T_a2, T_b2 form unidirectional communication ports. For example, the transceiver unit T_a1 directs the data telegrams received by its receiver Rx from the first channel segment a1 of the first fieldbus segment S1 for further transmission to the transmitter Tx of the transceiver unit T_a2. On the other hand, the transmitter Tx of transceiver unit T_a1 receives signals from the receiver Rx of the transceiver unit T_a2. The out-port of the respective transceiver unit coupled to the respective channel provides for a bi-lateral communication. However, a transceiver unit T_a1, T_b1, T_a2, T_b2 can either receive data telegrams from the channel segment with which it is coupled or it can transmit data telegrams to this channel segment at a given time. Hence, the coupler is a half-duplex coupler since it allows only half-duplex communication. The fieldbus is therefore also only configured to operate in half-duplex mode. Different thereto, full-duplex networks, couplers or repeater allow communication in both directions at the same time (LAN, Ethernet).

During normal mode of operation, the first and second channels ("a" channel and "b" channel) are independent from each other, and the transceiver units T_a1 and T_a2 are coupled with each other to couple the first channel segments a1 and a2 of the adjacent fieldbus segments S1, S2, and the transceiver units T_b1, T_b2 are coupled with each other to couple the second channel segments b1 and b2 of these fieldbus segments S1, S2. The first and second channels "a" and "b", are not coupled with each other during normal mode of operation and operate independently from each other. However, since network participants such as master and slaves are connected to both the first and the second channel and transmit data telegrams synchronously on both channels, the data telegrams are transmitted synchronous but independent from each other on the first and the second channel. The communication on the first channel ("a" channel) is therefore separate but redundant to the communication on the second channel ("b" channel).

If the first channel and the second channel remain completely decoupled from each other, which is the case with previous approaches, malfunction or interruption in one of the channel segments can lead to a failure of data communication also in channel segments of other fieldbus segments, and finally to a loss of redundancy. Data communication on the complete channel, extending over multiple fieldbus segments coupled by respective couplers, can be affected if an interruption occurs in only one fieldbus segment.

This drawback of previous approaches can be overcome by suitably switching between the channels in case of defects, as for example provided by the coupler 100.

Received data telegrams can be internally processed by the coupler 100 prior to further transmission. The internal signal processing can include a buffer or a refresh circuit as well as a start/stop circuitry (which is provided to control the activity of transceiver) for the transmission. For that purpose, each transceiver unit can be coupled with a signal processing unit to process a data telegram received by the transceiver unit. For illustration purposes, signal processing unit SigP_a1 is coupled with the receiver Rx of the transceiver unit T_a1 to receive data Rx_a1 from transceiver unit T_a1 which data Rx_a1 have been received from the first channel segment a1 of the first fieldbus segment S1. Signal processing unit SigP_a2 is coupled with the receiver Rx of the transceiver unit T_a2 to receive data Rx_a2 from transceiver unit T_a2 which data have been received from the first channel segment a2 of the second fieldbus segment S2. Signal processing unit SigP_b1 is coupled with the receiver Rx of the transceiver unit T_b1 to receive data Rx_b1 from transceiver unit T_b1 which data have been received from the second channel segment b1 of the first fieldbus segment S1. Signal processing unit SigP_b2 is coupled with the receiver Rx of the transceiver unit T_b2 to receive data Rx_b2 from transceiver unit T_b2 which data have received from the second channel segment b2 of the second fieldbus segment S2.

The respective data processing unit then transmits data, typically buffered or refreshed data, to the transceiver unit of the respective downstream channel segment. For example, signal processing unit SigP_a1 transmits data Tx_a1 to the transceiver Tx of the transceiver unit T_a2. Signal processing unit SigP_a2 transmits data Tx_a2 to the transceiver Tx of the transceiver unit T_a1. Signal processing unit SigP_b2 transmits data Tx_b2 to the transceiver Tx of the transceiver unit T_b1. Signal processing unit SigP_a1 transmits data Tx_a1 to the transceiver Tx of the transceiver unit T_a2. Furthermore, each signal processing unit transmit a drive enable signal DE to the respective transceiver unit for activating the transmission mode of the respective transceiver unit.

According to an embodiment, the structure of the coupler is symmetrically built between both segments and both channels, thus each part exists four times (like four transceivers). For the purpose of illustration only, the coupler 100 shown in Figure 3 includes only one decider D_b1 which is provided to evaluate whether a defect occurred in any of the upstream channel segments a1 and b1. More specifically, the decider D_b1 is configured to detect a defect in the second channel segment b1 of the first fieldbus segment S1 and to initiate actions to ensure that even in this case data telegrams received from the first fieldbus segment S1 can be redundantly transmitted to and in the second fieldbus segment S2.

The decider D_b1 has two input ports, one of which is coupled to receive signals, or data telegrams, from the first channel segment a1 and the other one of which is coupled to receive signals, or data telegrams, from the second channel segment b1.

Typically, the coupler includes a decider for each of the transceiver units. Only for ease of explanation the coupler 100 is illustrated to have a single decider.

According to an embodiment, the respective decider is a unit which both identifies whether an upstream channel segment is defective and controls any required switching between the channels to restore redundancy. The decider evaluates the data transmission in both channels, wherein in the case illustrated in Figure 3, decider D_b1 evaluates the data transmission from the channel segments a1 and b1, respectively, and more specifically monitors the data transmission from the second channel segment b1 relative to the first channel segment a1. For decider D_b1, data received from the first channel segment a1 is the "reference" against which the data transmission from the second channel segment b1 is evaluated. If, for example, a not shown decider D_a1 is provided, which would be associated with the signal processing unit SigP_a1, data received from the second channel segment b1 would be the "reference" against which the data transmission from the first channel segment a1 is evaluated.

For the detection of a defect such as a line interruption, signals provided by the processing units SigP_a1 and SigP_b1 can be used. In this case, the decider D_b1 can be coupled with the signal processing unit SigP_a1 and the signal processing unit SigP_a2 to receive processed or generated signals, for example a signal indicating that the respective signal processing unit did receive a complete data telegram. The receipt of a complete data telegrams is a possible indication that the respective channel segment functions properly.

Alternatively, for the detection of a defect, the decider D_b1 can also be provided with the received signals Rx_a1 and Rx_b1. In this case, the decider can be coupled with the respective receiver Rx (or the receiver port) of the transceiver units T_a1 and T_b1. This is indicated by the respective dotted lines.

Providing the coupler 100 with signal processing units is optional. In a more simple version, the receiver Rx (or the receiver port) of transceiver unit T_a1 would be directly coupled with the transceiver Tx (or transceiver port) of the transceiver unit T_a2, while the receiver Rx (or the receiver port) of transceiver unit T_a2 would be directly coupled with the transceiver Tx (or transceiver port) of the transceiver unit T_a1. In this simplified version, signal Tx_a1 would be signal Rx_a1 since no signal processing unit would "transform" signal Tx_a1 to signal Rx_a1. Correspondingly, signal Tx_a2 would be signal Rx_a2. However, modern fieldbus couplers include signal processing units to reduce signal distortions such as jitter or spikes, derived from EM-disturbance. Therefore, the coupler 100 includes, according to an embodiment, signal processing units such as described herein.

Irrespective of whether the decider D_b1 receives signals from the signal processing units SigP_a1 and SigP_b1 or the data telegrams Rx_a1 and Rx_b1 directly, the decider D_b1 compares the received signals, or the received data telegrams, to identify, whether an error occurred in the second upstream channel b1. A defect is identified, if no signals, or no data telegrams, or less signals or data telegrams, are received from the second channel segment b1 relative to the first channel segment a1. Note that for identifying a defect in the first channel segment a1 relative to the second channel segment b1, a separate decider D_a1, which typically has the same configuration as decide D_b1, would be used.

For illustration purposes only, it is assumed that the decider D_b1 receives signals provided by the signal processing units SigP_a1 and SigP_b1. These signals can be signals derived from the received data telegrams by the signal processing units. In this case, it is appropriate to provide a switch-over of the signal Tx_a1 from the first channel to the second channel after signal processing. Assume that a defect occurred in channel segment b1. In this event, the signal processing unit SigP_b1 does not receive data telegrams Rx_b1 or less data telegrams, or receives only data telegrams, which are so strongly distorted that no meaningful data telegram Tx_b1 can be generated by the signal processing unit SigP_b1 for further transmission. The decider D_b1 therefore does not receive a signal representing a successful reception of data telegrams from channel segment b1. However, the decider D_b1 receives at the same time signals representing a successful data transmission on, or data reception from, channel segment a1. In this case, the decider D_b1 decides that channel segment b1 is defective and activates a switching unit Sw_b1, which is represented in Figure 3 by two separate switches, so that the transceiver unit T_b2 receives the drive enable signal DE as well as the data telegram (signal) Tx_a1 from the signal processing unit SigP_a1 of the first channel segment a1. To this end, the decider D_b1 transmits a signal swov_b1 for activating the switching unit Sw_b1. Once activated, the drive enable port DE and the transceiver Tx (or the transceiver port) of the transceiver unit T_b2 are coupled with the respective ports of the signal processing unit SigP_a1 through action of the switching unit Sw_b1.

According to an embodiment, the switching unit provides two signals. First, it switches a drive enable signal and second it switches the data telegrams. For that reason, the switching unit has two separate switches configured for the respective function.

As a consequence of this switching, the data telegram Tx_a1 is received by both transceiver units T_a2 and T_b2 so that this data telegram can be transmitted to the downstream channel segments a2 and b2, respectively. The defect in the second channel segment b1 of the first fieldbus segment S1 therefore does not affect the data transmission in the downstream channel segments a2, b2 and both channel segments transmit data telegrams. Hence, the redundancy of the whole fieldbus is improved.

The configuration illustrated in Figure 3 with a switch-over of data telegrams between the channels after signal processing provides for an easy implementation using Programmable Logic Devices (PLD), Complex Programmable Logic Device (CPLD) or FPGA (Field Programmable Gate Array). It would also be possible to use a PLD in combination with a so-called microcontroller (or μController or μC) or fast DSPs (Digital Signal Processor), or a DSP alone.

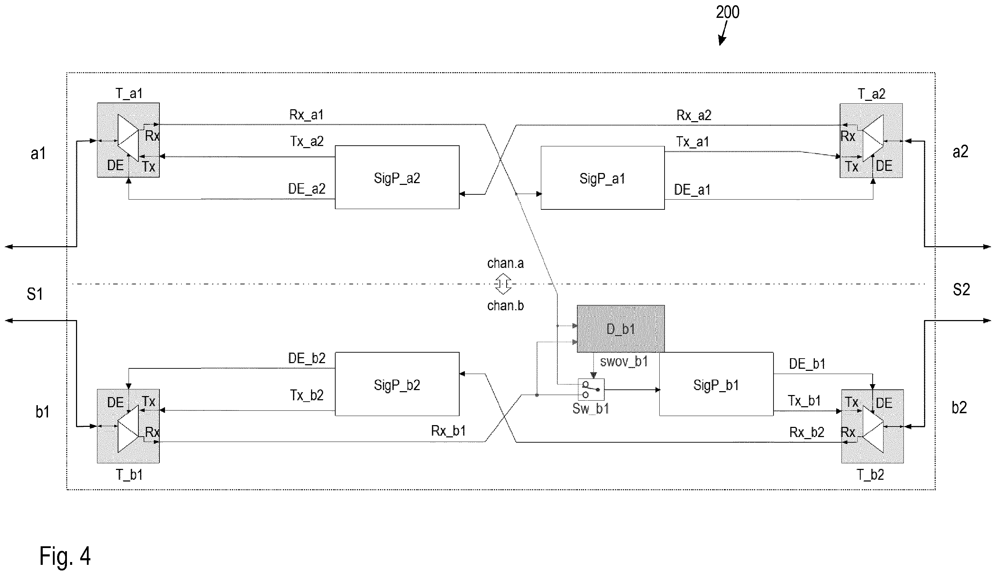

Another option for implementation of a coupler 200 is the switch-over of data telegrams prior to the signal processing. This is illustrated in Figure 4. This implementation is a more simple approach as less signals need to be transmitted between the channels. In Figure 4, only the data telegram Rx_a1 are transmitted to the decider D_b1 which also receives the data telegram Rx_b1. In Figure 3, data telegram Tx_a1 as well as signals from the signal processing unit SigP_a1 or data telegram Rx_a1 are transmitted from the first channel "a" to the second channel "b".

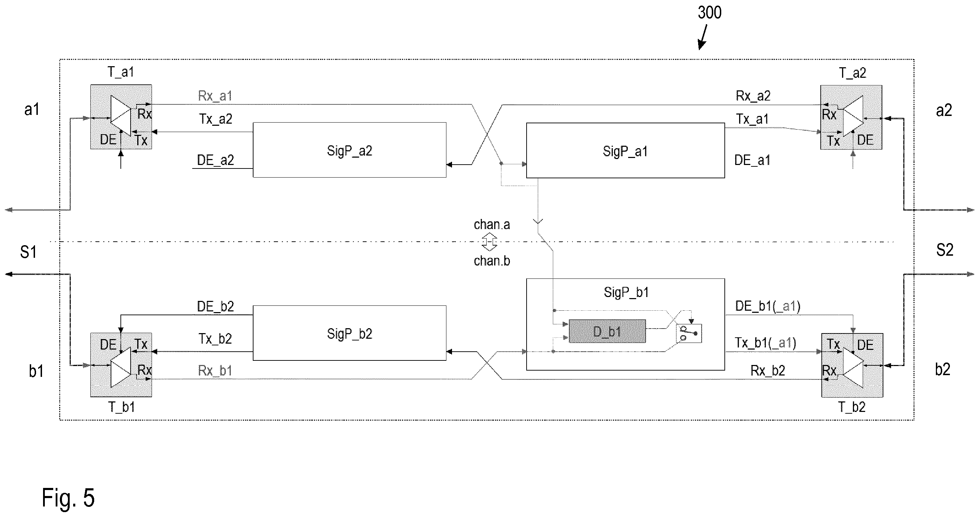

A more generic embodiment that is representative for both implementations of Figure 3 and Figure 4 is illustrated in Figure 5 which illustrates a coupler 300 in which the decider D_b1 and the processing unit SigP_b1 form together a unit capable of signal processing and deciding, as well as of switching. According to an embodiment, the decider can be integrated in the signal processing unit, or can be a part of it. Furthermore, the switching units can also be integrated into the signal processing unit so that signal processing unit SigP_b1 would transmit, in normal mode of operation when the upstream channel segment b1 is not defective, its own drive enable signal DE and the data telegram Tx_b1 to the transceiver T_b2, and in case of a defect in the upstream channel segment b1, the drive enable signal DE and the data telegram Tx_a1 received from the signal processing unit SigP_a1 to the transceiver T_b2.

In case of a defect, a switching between the channels cannot take place immediately after occurrence of the defect for the following reasons. From the perspective of the functionality of the fieldbus, a data telegram received by a coupler must be transmitted to the next fieldbus segment with a very small delay (typically 1...4 bit times). Thus transmission of a data telegram is initiated upon start of the reception of the data telegram. The coupler does not wait until the complete data telegram is received. Thus, a defect is detected only with a given delay, for example, when the detection is based on the evaluation whether a data telegram has been completely received.

The evaluation of the presence or absence of an error is thus practically based, according to embodiments described herein, on a "condition" of a channel which is statistically evaluated over a period of several data telegrams, and even more particularly over a period of several bus cycles. During that period, missing or incomplete data telegrams are evaluated.

The mathematical evaluation of the error statistic can be simple. For example, switch-over may be initiated only after a given number of errors were detected to improve reliability of the switch-over and to avoid that switch-over takes place if only (about) 16 or 256 telegrams are missing. This ensures that the switch-over takes place only when errors with a given statistical significance were detected. This avoids a permanent switch-over, and also a switch-back, for transient errors. The same applies to the return in the normal more of operation, if the interruption, or malfunction, occurred only temporary and data telegrams are received from each channel.

According to an embodiment, the data telegrams can be evaluated over a given moving time frame. For improving robustness of the decision making process and to avoid permanent switching in case of single data losses, a switching is typically initiated only if data loss or data corruption occurs for a given period of time within the time frame. This ensures that a switching does not take place too early. The same applies to a back-switching to normal mode of operation.

Interferences or flaws may affect the evaluation procedure and can lead to boundary cases which could result in a too early switching. To avoid or reduce this phenomenon, the evaluation procedure can favour the normal mode of operation over the redundancy-restoring mode of operation in the event of a boundary case. The redundancy-restoring mode may also be referred to as switch-over mode. The main reason is that incomplete data telegrams may also lead to the judgment that channel is defective, although the data telegram loss may be a result of a different reason and is not a result of a defect of the channel segment. In those boundary cases a switching would actually lead to a reduction in redundancy as the transmission of data telegrams from the channel segment, which is erroneously considered to be defective, would be prevented by the switching. For that reason, maintaining the normal mode of operation is beneficial for boundary cases.

According to embodiments described herein, the decider uses information provided by the signal processing units of the respective channels or channel segments, for detecting a defect. If such a defect is detected, the decider decides to switch and transmit, for example, a switching signal swov to the respective switching units Sw as described further above.

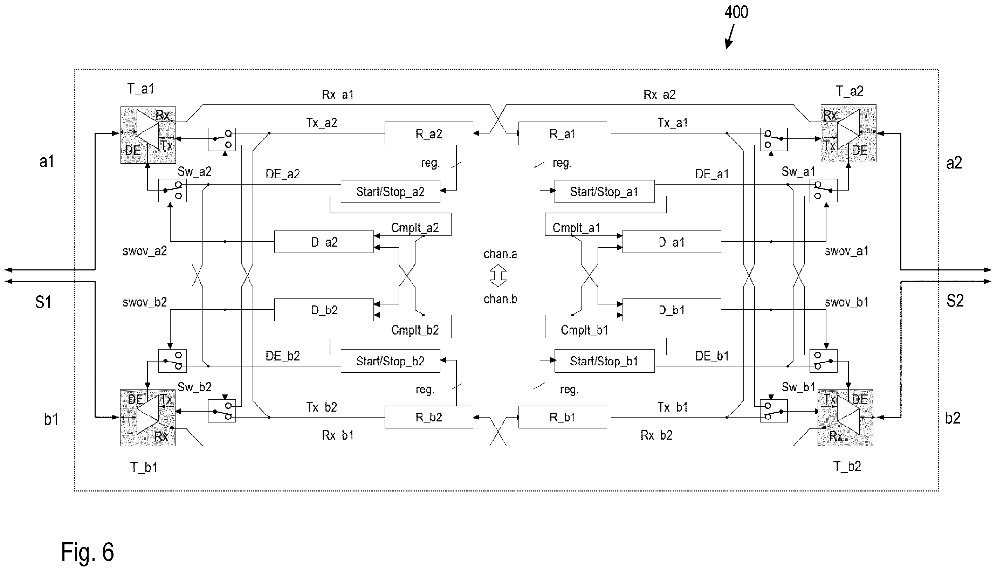

A more specific implementation for all channel segments, without being limited thereto, is illustrated in Figure 6 which shows a coupler 400. The coupler 400 is symmetric with respect to both channels (first and second channel) as well as with respect to both fieldbus segments (first and second fieldbus segments S1 and S2). For that reason, four deciders D_a1, D_a2, D_b1, and D_b2 with respective associated switching units Sw_a1, Sw_a2, Sw_b1, and Sw_b2 are provided.

The signal processing units are embodiment in coupler 400 by respective refresh circuitries R_a1, R_a2, R_b1, R_b2 and start/stop circuitry denoted by Start/Stop_a1, Start/Stop_a2, Start/Stop_b1, and Start/Stop_b2, respectively. One start/stop circuity and one refresh circuitry form together a single processing unit.

Assume again that an error occurred in the upstream channel segment b1. The decider D_b1 receives signals Cmplt_a1 and Cmplt_b1 from the start/stop circuitries Start/Stop_a1 and Start/Stop_b1. The start/stop circuitries evaluate the start and the end (stop) of a transmission of a data telegram. The signals Cmplt_a1 and Cmplt_b1 can be referred to as "complete signal" indicating when a data telegram has been completely received. The respective "complete signal" is generated after complete transmission of the respective data telegram. If, within a given time frame, the number of received signals Cmplt_a1 and Cmplt_b1 is the same or if the difference between the received signals is below a given threshold, the decider D_b1 rates that the channel segment b1 is intact and maintains the normal mode of operation where the refreshed version Tx_b1 of the data telegrams Rx_b1 is transmitted to the transceiver T_b2.

The decider for a given upstream channel segment compares the transmission activity of the both upstream channel segments wherein the activity of the other upstream channel segment is used as reference. In case of decider D_b1, the monitored upstream channel segment is the second channel segment b1 while the reference is the first channel segment a1. If no signal Cmplt_b1 is received within a given time frame, an error is registered. If, with the given time frame, the number of received signals Cmplt_a1 and Cmplt_b1 is different and exceeds the given threshold, the decider D_b1 rates that channel segment b1 is defective. Furthermore, the decider D_b1 transmits a switching signal swov_b1 to the switching unit Sw_b1 to cause the switching unit Sw_b1 to switch from the second channel to the first channel so that the drive enable signal DE and the data telegrams Tx_a1 (from the first channel) are transmitted to the transceiver unit T_b2. The data telegrams Tx_a1 are thus transmitted to both the transceiver unit T_a2 and T_b2. The switching is a non-symmetric Y-distribution between the first and the second channel since the switching occurs only for the data transmission direction from the first fieldbus segment S1 to the second fieldbus segment S2 but not in the opposite direction. The Y-distribution is therefore only a connection of one upstream channel segment with two downstream channel segments.

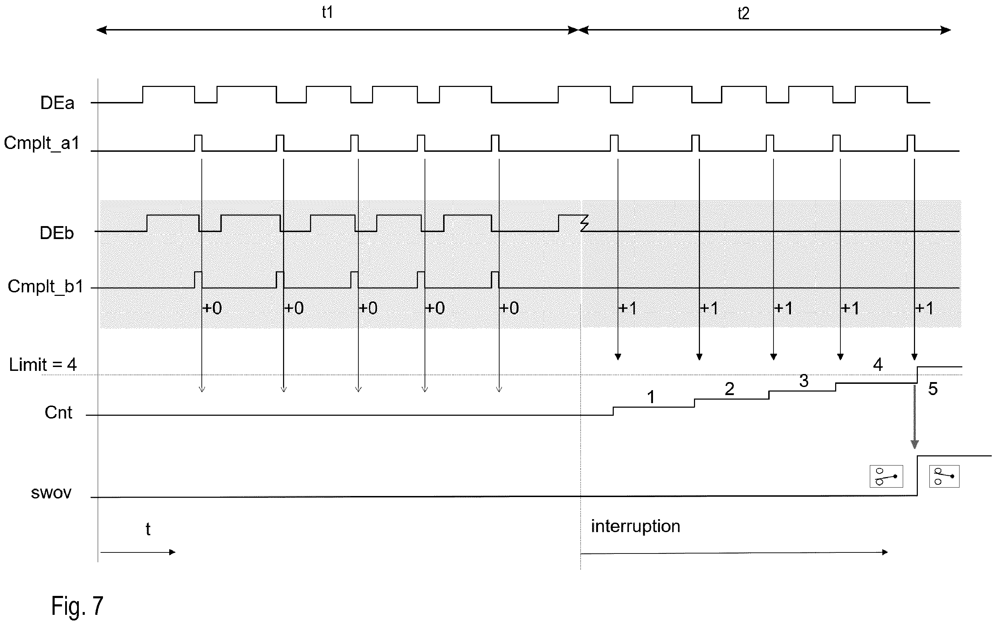

The evaluation of errors is exemplified in Figure 7. Again, it is assumed that the second channel segment b1 is monitored. An interrupted is identified by the absence of data telegrams in the second channel segment b1, and an event is associated with the absence of the data telegram. Each event increases a counter which can be a part of decider D_b1.

If an error is detected, a counter Cnt is increased by 1 as illustrated in Figure 7. The decider D_b1 acts as a counter and increases Cnt each time an error is detected. As illustrated in Figure 7, during time frame t1, both channel segments a1 and b1 work properly and "complete signals" Cmplt_a1 and Cmplt_b1 are generated. The counter Cnt is not increased and remains 0 (but it would be decreased if value is > 0). During time frame t2, channel b1 is interrupted. "Complete signals" cmplt_a1 are continuously generated for channel segment a1 while no or less "complete signals" Cmplt_b1 are generated for channel segment b1. For each complete signal complt_a1 to which no corresponding complete signal Cmplt_b1 is generated, the counter Cnt is incremented by 1. When the counter Cnt exceeds a given threshold, the output of decider D_b1 is set to swov to activate switching unit Sw_b1 for supplying drive enable signal DE and the data telegram Tx_a1 from the first channel to the transceiver T_b1. In the present embodiment the threshold is exemplarily set to 4. At the same time, drive enable signal DE and the data telegram Tx_a1 from the first channel are supplied to the transceiver T_a1 as well. This condition remains until the counter Cnt is decreased (by healthy channel_b1) to 0 if the interruption or malfunction is removed and data telegrams are received from channel segment b1. By appropriately setting the threshold to a given value, repeatedly switching over due to short temporal faults can be avoided.

Cases may occur where the "defect image" of the affected channel segment may not be entirely clear and where temporal disturbances may lead to misevaluations. To stabilize the behaviour of the coupler by avoiding a too early switching-over, more weight may be given to maintaining the current status than to switch-over. This is particularly of benefit in boundary cases which do not show a clear defect image. Only if a persistent interruption is detected, a switch-over should be activated. This behaviour of the coupler can be controlled by setting, for example, the threshold to a higher value.

For illustration purposes of the logic implementation, the counter of the decider D_b1 is incremented by 1 if the respective signal Cmplt_b1 is missing (indicating a missing or incomplete transmission of a data telegram) and is decremented by 1 if the respective signal Cmplt_b1 is present.

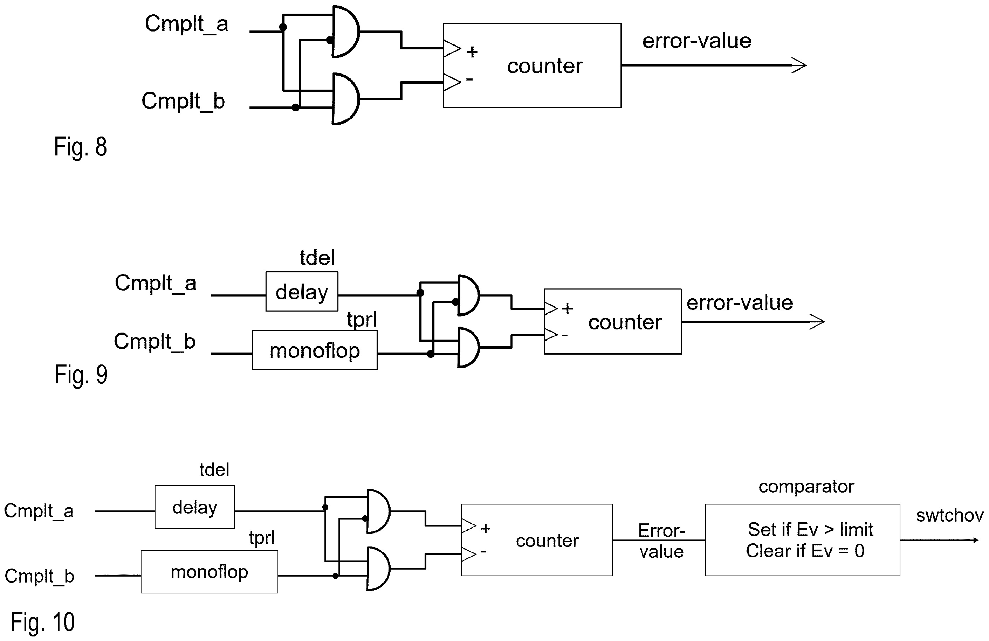

If both channel segments would transmit data telegram completely synchronously, it would be possible to directly compare logically the "complete signals" as exemplified in Figure 8. Standards like MVB allows a limited delay of one telegram on the two channels, the so-called inter (frame) signal skew $t_{iss}$. Since the logic is applicable for each pair of possible "complete signals" Figures 8 to 10 uses Cmplt_a and Cmplt_b to cover this timeframe. However, the logic shown in Figures 8 to 10 are for comparing the channel b (second channel) with channel a (first channel) being the reference channel.

If both Cmplt_a and Cmplt_b are present, then the lower logic AND gatter in Figure 8 decrements the counter while if Cmplt_b is missing and Cmplt_a is present, the upper logic AND gatter which compares Cmplt_a with the inverted Cmplt_b increments the counter. Note that the counter is neither incremented nor decremented if Cmplt_a, being the reference signal, is missing. Therefore, this logic implementation is valid for the evaluation of the channel segments b1 and b2, respectively. For evaluating the channel segments a1 and a2, respectively, the signal input of Cmplt_a and Cmplt_b would be exchanged.

Depending on the actual type of the fieldbus, the data telegrams on the first channel a and the second channel b can be transmitted with a given temporal offset relative to each other. The maximum offset is defined for each fieldbus protocol. Therefore, the presence and absence of the signals Cmplt_a and Complt_b must be evaluated within a given period defined by the maximal allowed offset. The maximum allowed offset is often referred to as inter signal skew $t_{iss}$.

Since both "complete signals" are practically not provided at the same time due to internal jitter and can be delayed relative to each other within the maximum allowable offset, the logic implementation illustrated in Figure 8 would not be able to reasonably compare the signals and would not deliver any meaningful results. For that reason, a logic implementation which considers the possible offset of Cmplt_a relative to Cmplt_b is suggested as illustrated in Figure 9. The counter Cnt is increased if within a time frame $+/t_{iss}$ relative to the reference signal Cmplt_a no signal Cmplt_b is detected.

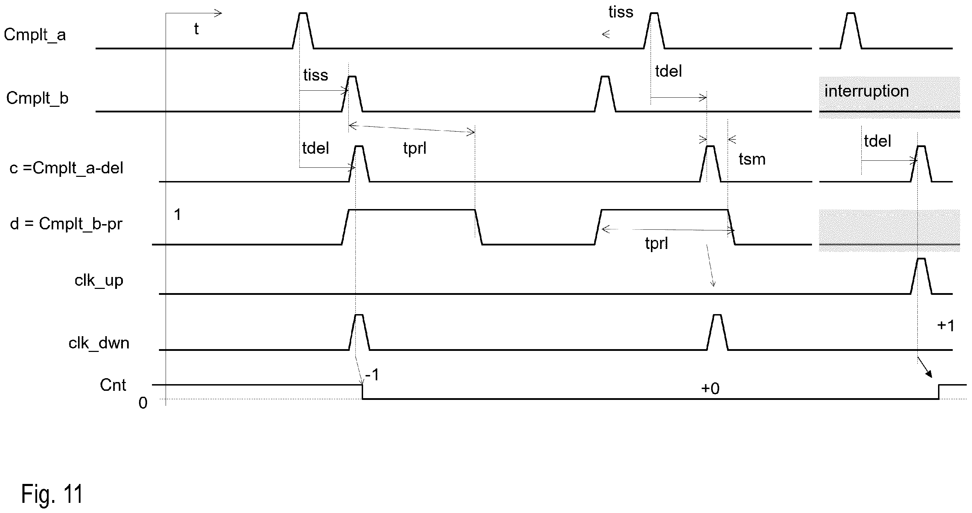

For making the logic offset-tolerant, i.e. to implement the time frame $+/-$ $t_{iss}$, the signal pulse Cmplt_b is expanded by twice of the maximum allowable offset, for example by using a mono flop as illustrated in Figure 9. Furthermore, the signal pulse Cmplt_a must be delayed by the maximum allowable offset as shown in Figure 9. A corresponding time dependent illustration is shown in Figure 11 with inter signal skew $t_{iss}$ being the maximum allowable offset between data telegrams of both channels. The time period safety margin $t_{sm}$ is a safety adjustment which takes account of further internal offsets such as sampling, jitter or the bus clock of the used bit shift registers. Time $t_{del}$ is a delay time for the signal Cmplt_a, while $t_{prl}$ is an extension time of the mono stabile flip-flop for the signal Cmplt_b. It follows:

$$t_{del} = t_{iss} + t_{sm} \quad \text{and} \quad t_{prl} = 2\, t_{del}.$$

The above described time behaviour and the consideration of the inter-signal skew $t_{iss}$ is generally valid for the evaluation of a date telegram, if the completeness of a date telegram is considered as criteria for the assessment of defects. If a completed data telegram is present in the reference channel and the completeness is represented by the presence of a signal Cmplt_a, a completed data telegram must be received within the time frame $+/-$ $t_{iss}$ in the channel under evaluation for assessment of a failure free transmission. Otherwise, a defect or failure is detected.

The implementation as shown in Figure 9, together with a not shown comparator which would receive the error-value (counter value Cnt) to assess, whether the counter exceeds a given threshold, would already be a suitable logic implementation for the decider. The predefined threshold itself is a parameter which can be adjusted. The larger the threshold is set, the later occurs a switching between the channels, i.e. a switching from normal mode of operation to the redundancy-restoring mode of operation. Furthermore, the risk that disturbing signals, which erroneously increment the counter, results in an actually unwanted switching is also reduced.

In practical implementations according to embodiments described herein, the switching is not reversed (inverted) at the threshold-value, i.e. the switching from the redundancy-restoring mode of operation to the normal mode of operation, when the counter is decremented below the threshold, but at a reversal threshold which is lower than the threshold for switching into the redundancy-restoring mode of operation. As an example, the reversal threshold can be set to 0 or close to 0. This results in a switching hysteresis which is, however, beneficial to avoid a too early return into the normal mode of operation. For example, a low reversal threshold is beneficial in case of a loose contact in the evaluated channel segment, which results only in sporadic interruptions, to keep the redundancy-restoring mode of operation stably activated even in the event that a sporadic connection is established.

An example of such an implementation is illustrated in Figure 10.

Figures 8 to 10 illustrate specific logic implementations. It should be noted here that the deciders of Figures 8 to 10 for opposite channel segments such as for channel segments a1 and b1, or for channel segments a2 and b2, can have the same internal structure. However, the inputs are inverted to take account of the fact that the respective above inputs of the deciders in Figures 8 to 10 are the input for the "reference" channel segments.

The deciders can also be implemented by a digital processing unit (software implementation) on a single chip.

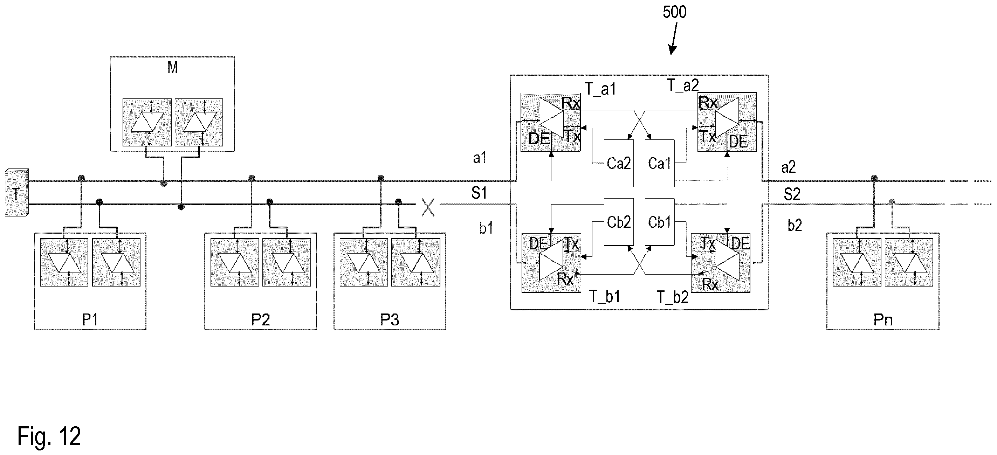

With reference to Figures 12 to 16 various scenarios of defects are described, which can be handled by the coupler according to embodiments described herein. Each of these Figures show a coupler 500 coupling two fieldbus segments S1, S2 each having a first channel segment a1, b1 and a second channel segment a2, b2. For ease of explanation, the coupler 500 is shown to include four transceiver units T_a1, T_a2, T_b1, T_b2 and comparator units Ca1, Ca2, Cb1, Cb2, wherein each comparator unit can include a decider, a signal processing unit, such as a refresh unit and a start/stop unit, and a switching unit as described in any of the embodiments described herein.

The coupler 500 and the two fieldbus segments S1, S2 form together a fieldbus which is coupled with a master M and a plurality of participants P1 to Pn. The participants P1 to Pn can be any device such as a sensor for sensing operational conditions of a train, an actor for performing certain actions in response to control signals received over the fieldbus, and data processing or data visualization device such as information display panels, without being limited thereto.

Figure 12 illustrates a first scenario where a line interruption occurs in channel segment b1 next to the coupler 500 so that the complete channel segment b1 is disconnected from the coupler 500. Any data telegram sent by any participant P1 to P3 and the master M on channel segment b1 is not received by the coupler 500 due to the line interruption.

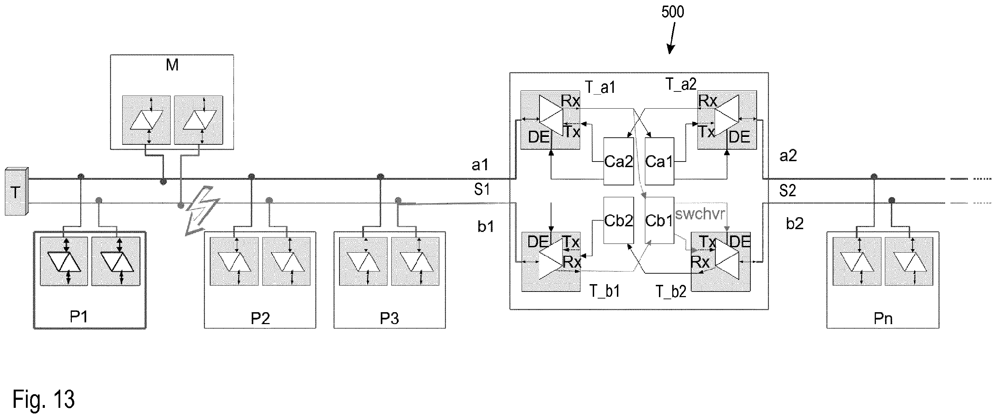

Another defect is illustrated in Figure 13 which shows a short circuit in channel segment b1. In both scenarios illustrated in Figure 12 and 13, the defect occurring in channel segment b1 can be reliably detected by the coupler 500, and the loss of redundancy can be mitigated by transmitting data telegrams received from channel segment a1 to both downstream channel segments a2 and b2, respectively. This means that redundant transmission of data telegrams is maintained in fieldbus segment S2, and any further following fieldbus segments, for data transmission from the fieldbus segment S1 to the fieldbus segment S2. The coupler 500, however, does not detect the defect in the channel segment b1 for data transmission from the fieldbus segment S2 to the fieldbus segment S1. For this data transmission direction, the coupler 500 would transmit data telegrams received from channel segment a2 to channel segment a1, and data telegrams received from channel segment b2 to channel segment b1 despite the fact that channel segment b1 is defective.

In other words, the coupler as described herein is capable of detecting, for a given data transmission direction, a defect occurring in the upstream channel segments and of transmitting data telegrams received from the unaffected upstream channel segment being parallel to the affected upstream channel segment to both downstream channel segments.

The switching provided by coupler 500 in the scenarios illustrated in Figures 12 and 13 clearly improves the overall redundancy of the fieldbus.

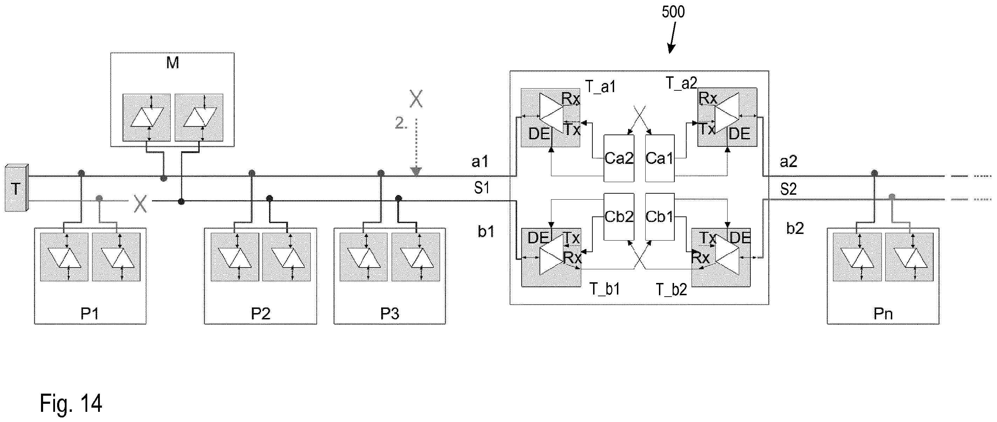

A more complex scenario is illustrated in Figure 14. A line interruption of the channel segment b1 is between participant P1 and the coupling point of the master M with the channel segment b1. This means that only data telegrams sent by the participant P1 are not transmitted through the channel segment b1, whereas data telegrams from the master M as well as from the participants P2 and P3 are transmitted through the channel segment b1 to the coupler 500. For ease of explanation, it is assumed that open (unterminated) line wire ends formed by the interruption do not result in a complete failure of the channel segment b1.

Since only data telegrams from the participant P1 are not received by the coupler 500, only few of all data telegrams on channel segment b1 are missing. Therefore, the statistic evaluation of the channel segment b1 relative to the channel segment a1, being the reference channel segment for the channel segment b1, by the comparator unit Cb1 might not detect the defect if the threshold for switching from normal mode of operation to the redundancy-restoring mode of operation is set too high. However, this situation can be addressed by setting the threshold accordingly.

It is noted that the switching between normal mode of operation and redundancy-restoring mode of operation is separate for each channel segment. Comparator unit Cb1 evaluates channel segment b1 relative to channel segment a1, which functions here as reference, while comparator unit Ca1 evaluates channel segment a1 relative to channel segment b1, which functions here as reference. This distinction provides for a separate evaluation. For that reason, complex defect scenarios can be handled.

Assume that a switching to the redundancy-restoring mode of operation has been effected by coupler 500, specifically by comparator unit Cb1, so that only data telegrams from the channel segment a1 are transmitted to the channel segments a2 and b2 while data telegrams from the channel segment b1 are not transmitted to the channel segment b2 even if some data telegrams are received from channel segment b1 as described above. If in this situation an additional line interruption in the channel segment a1 occurs, indicated by the "X" above channel segment a1 in Figure 14, the whole data transmission from the fieldbus segment S1 to the fieldbus segment S2 is affected. Due to the second line interruption in channel segment a1, the coupler 500, more specifically comparator units Ca1 and Cb1, does not receive any data telegram from the channel segment a1, but some data telegrams from channel b1 as only the data telegrams from participant P1 are not transmitted by the channel segment b1. The evaluation of the channel segment a1 relative to the channel segment b1 by comparator unit Ca1 now identifies, after certain time, that statistically less (specifically no) data telegrams are received from the channel segment a1 relative to the data telegrams (data telegrams from the master and the participant P2 and P3 but not from participant P1) received from channel segment b1. Once the difference between the received data telegrams exceed the set threshold, comparator unit Ca1 initiates a switching into the redundancy-restoring mode of operation and transmits data telegrams received from channel segment b1 to transceiver units T_a2. Note that comparator unit Ca1 only controls the coupling of the transceiver unit T_a2 with either transceiver unit T_a1 or transceiver unit T_b1. Hence, any switching by comparator unit Ca1 does not affect the mode of operation defined by comparator unit Cb1.

Therefore, in the complex defect scenario illustrated in Figure 14 and for the data transmission from fieldbus segment S1 to fieldbus segment S2, while comparator unit Cb1 still causes coupling of transceiver unit T_a1 with transceiver unit T_b2, comparator unit Ca1 causes coupling of the transceiver unit T_b1 with the transceiver unit T_a2. Hence, despite the fact that some data telegrams are not transmitted by channel segment a1 due to the line interruption next to participant P3, the received data telegrams are at least transmitted to channel segment a2. The next "downstream" coupler coupling fieldbus segment S2 with a further fieldbus segment S3, and for the case of receiving data telegrams which were transmitted by coupler 500 to fieldbus segment S2, would then restore full redundancy with respect to the data telegrams transmitted by coupler 500, as no data telegrams are received by this coupler (the next "downstream" coupler coupling fieldbus segment S2 with a further fieldbus segment S3) from the channel segment b2.

The reason for the above described behaviour results from the fact that a defect in a channel segment acting as reference for the respective other channel segment is not noted, for example when employing any of the deciders shown in Figures 8 to 10. Furthermore, the evaluation of the individual channel segments by the respective comparators units including, for example, any of the deciders shown in Figures 8 to 10, are independent from each other. See also Figure 6.

An additional measure to address this complex defect scenario is to adapt the deciders such as the one shown in Figure 10. In the above described complex defect scenario of Figure 14, comparator unit Cb1 couples transceiver unit T_b2 with transceiver unit T_a1 although channel segment a1 is defective. The simple logic of the decider as for example shown in Figure 10 would not allow to return to the normal mode of operation. To address this, the deciders can be modified so that after a pre-defined time-out, which clearly represents an interruption, the counter of the deciders is decremented to allow the respective comparative unit to return to the normal mode of operation.

In the above complex defect scenario it would mean that the comparator unit Cb1, which still couples transceiver unit T_b2 with transceiver unit T_a1, does not receive any data telegrams from channel segment a1 which is the reference channel segment for channel segment b1. The counter of the decider of comparator unit Cb1 is not further incremented as no data telegrams are received anymore form channel segment a1 while some data telegrams (from all participants except for P1) are received. The "not further incrementing" of the counter in the comparator unit Cb1 is taken as indication of a defect in channel segment a1, the counter is caused to decrement after lapse of the pre-defined time-out. The pre-defined time-out is selected such to ensure that a transient failure in channel segment a1 does not cause the counter to decrement which could lead to a repeated switching between normal mode of operation and redundancy-restoring mode of operation.

If the non-termination of the line interruption in Figure 14 is considered, the above described defect scenario may lead to a different defect evaluation. The main reason is that a non-terminated line may even not properly transmit any data telegram at all even in the case of the line interruption of channel segment b1 illustrated in Figure 14. In this case, the line interruption of channel segment b1 may lead to a virtually complete loss of data transmission on channel segment b1. The comparator unit Cb1 therefore quickly determines the defect and couples the transceiver unit T_b2 with the transceiver unit T_a1. The additional interruption of channel segment a1 would then result in a complete failure of any data transmission from fieldbus segment S1 to fieldbus segment S2.

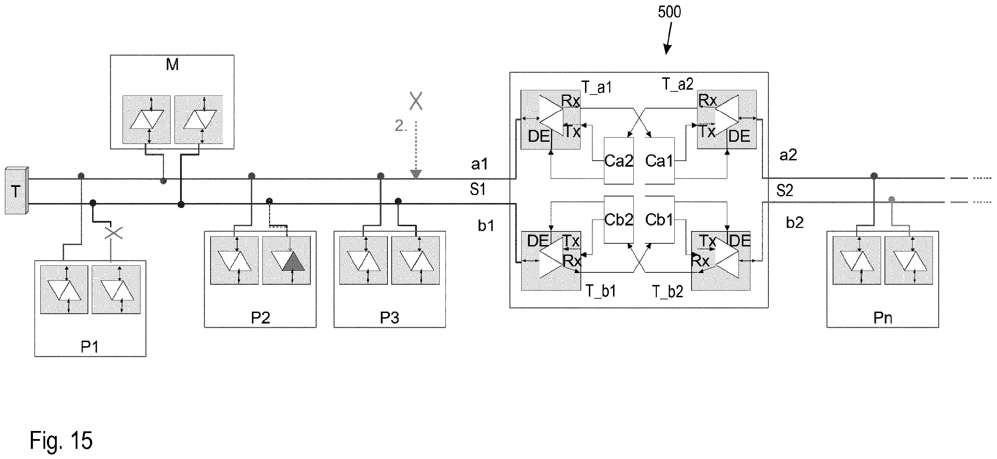

Another defect scenario is illustrated in Figure 15 showing a defect of a spur, i.e. a connection between participant P1 and the channel segment b1. Channel segment b1 itself is not defective. A switching caused by comparator unit Cb1 should be avoided here by setting the threshold appropriately (sufficiently high). This also ensure that a second line interruption in channel segment a1, as illustrated by the "X" above channel segment a1, does not lead to a complete loss of data transmission as described further above.

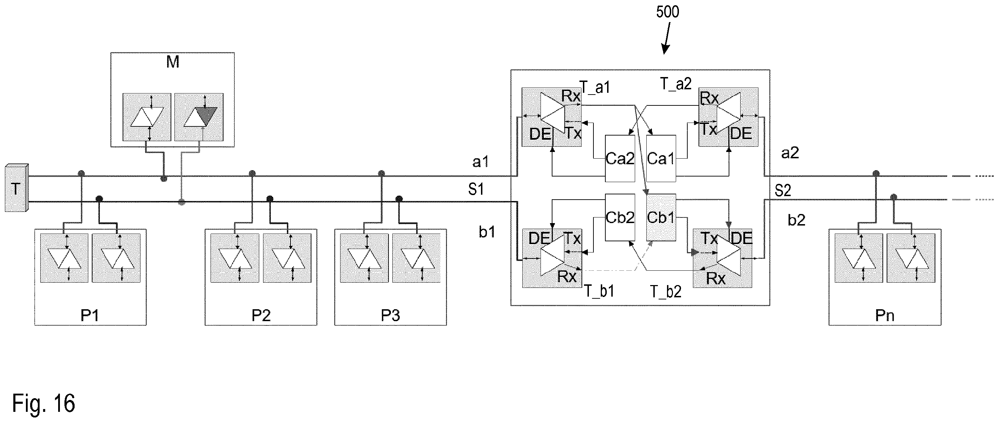

A further defect scenario is illustrated in Figure 16 which shows a defect within the master M or in the spur of the master with channel segment b1. Since the master typically transmits many more date telegrams than any other participant P1 to Pn, the loss of data telegrams from the master M in channel segments b1 is relatively quickly recognized by comparator unit Cb1. Although channel segment b1 as such is not defective, i.e. the fieldbus itself has redundancy, it is desirable to couple transceiver unit T_a1 with transceiver unit T_b1 to ensure redundant data transmission from the master M in downstream direction from fieldbus segment S1 to fieldbus segment S2. For that reasons, the threshold should not be set to too high.

It is noted that the decider of the coupler is not limited to the embodiments of Figures 8 to 10 which illustrates a simple logic implementation using a statistic evaluation of the "complete signals" indicating the successful reception of data telegrams from upstream channel segments. Further variations are possible.

For example, the statistic evaluation can also distinguish between data telegrams received from the master and data telegrams received from other participants. This provides for a more effective switching in case of loss of data telegrams from the master relative to the loss of other data telegrams. Data telegrams from the master can be easily identified and therefore evaluated differently than other data telegrams.

As a further variation, the comparator units can be configured to detect frames within the cycles of the fieldbus system to identify the fieldbus cycle. This can be done by specifically searching and identifying the cycle frames which are specific for each protocol. Knowledge of the fieldbus cycle can improve the reliability of the defect detection. For example, switching might only be initiated if the major portion of a cycle, or only if a complete cycle, is not received. Hence, the detection can be cycle-based or cycle-orientated. This would, for example, allow to switch back from the redundancy-restoring mode of operation to the normal mode of operation after the second interruption (on channel segment a1) has occurred in Figure 15. The above could also be applied to the complex defect scenario shown in Figure 14 to allow the comparator unit Cb1 to return to the normal mode of operation.

Another modification for improving reliability of the switching is to incorporate a jabber inhibit circuitry into the coupler, for example for each comparator unit or each decider unit. The jabber inhibit circuitry controls the length of a data telegram and terminates the data telegram to keep the length within the length defined by the fieldbus protocol. This is particularly relevant for the input of the deciders to avoid that a protocol violation causes a switching of the coupler.

A yet other modification is to ensure that all incoming signals (data telegrams) have signal values within given ranges even under varying electrical defect such as overvoltages and undervoltages. This shall ensure that a switching of the coupler is not caused by temporal electrical defects.

A further modification includes the validation of the complete signal. A correct complete signal is relatively short (short pulse) and occurs after the end of a data telegram. When taking this into account when evaluating the complete signals, those signals which are either too long or which do not occur within a given period after the end of a telegram are disregarded as complete signal. For example, a self-retriggered time period (hold-off) during which the complete signal can be detected can help avoiding that short interfering pulses lead to a switching of the coupler.

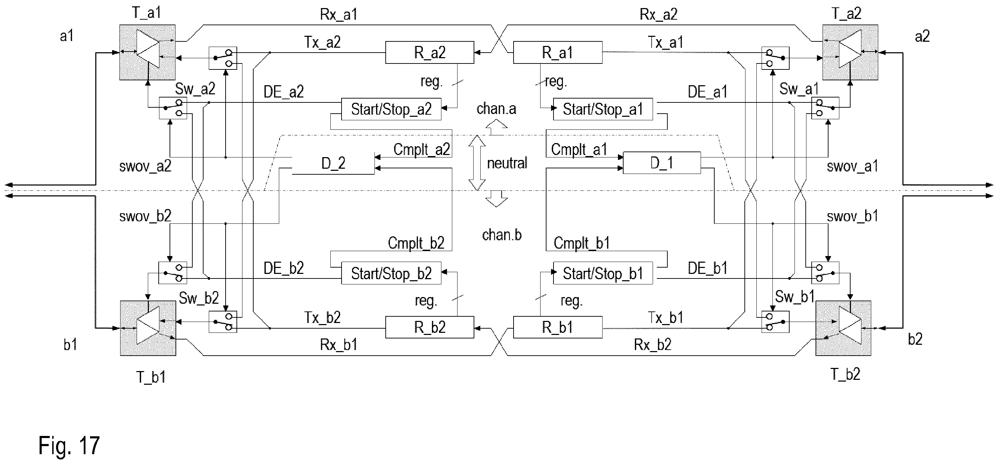

A simplified version of a coupler is illustrated in Figure 17. In this embodiment, a single decider D_1, D_2 is used for a given transmission direction unlike in the embodiment shown in Figure 6 where two deciders are used for each transmission directions, one for each direction and each channel segment. Hence, the functionality of the deciders D_a1 and D_b1 is provided by the decider D_1 and the functionality of the deciders D_a2 and D_b2 is provided by the decider D_2. The internal functionality of the decider D_1 and D_2 can be identical to the functionality provided by the decider D_a1, D_b1 and D_a2, D_b2, respectively. As a consequence, the switching signals swov_a1 and swov_b1 are not simply inverted to each other but can be set independently from each other according to the defect detected by the decider D_1. The same applies to the switching signals swov_a2 and swov_b2.

The "area" denoted as "neutral" in the coupler shown in Figure 17 means that this area and the circuitries therein are not specific to a single channel but form part of both channels.

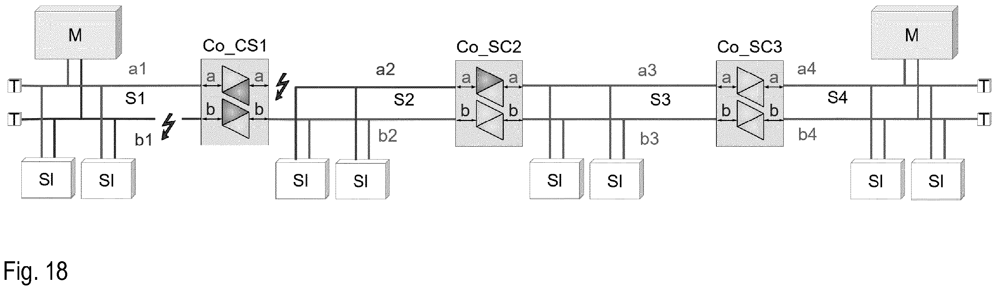

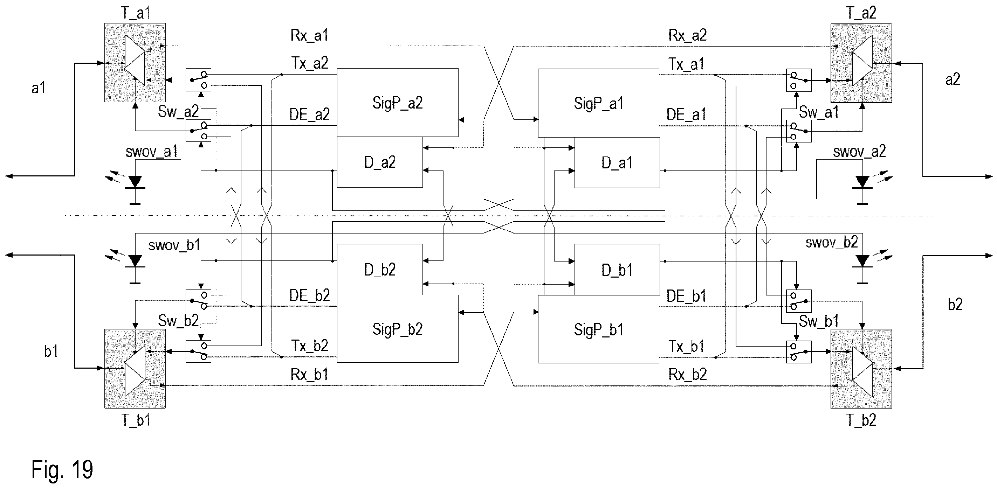

A further variation is illustrated in Figures 18 and 19 which show couplers with an additional indicator and/or an additional transmitting unit, and/or an additional diagnose interface. Any of these means are provided to facilitate localisation of the defect in the fieldbus network.

A specific example for an indicator, which can be embodied by an optical signal source such as an LED, is generically illustrated in Figure 18. Each coupler Co_CS1, Co_CS2, Co_CS3 includes four LEDs, each assigned to a specific channel segment with which the coupler is coupled. The LED turns on, or changes its colour, if a defect is detected in the channel segment to which the respective LED is assigned.

For practical realisations, the switching signal swov can also be used to trigger the optical signal. A specific example is illustrated in Figure 19. For ease of identification of the defect, the respective LED is placed in proximity to the coupling port for the respective channel segment to which the LED is assigned.

The indicator can also be embodied as display for visualising the coupler and the channel segments, which changes their colour in case of a defect.

For further facilitating localisation of the defects and monitoring of the fieldbus network, the coupler can be provided with a transmitting unit or an interface to an integrated fieldbus-device acting as a normal fieldbus participant, according to an embodiment. The transmitting unit or the fieldbus-device can communicate with a remote monitoring device or to the control-device coupled with the fieldbus, by supporting diagnosis information. The diagnosis information sent by the coupler is accessible to the control-device thus it is possible identify the detected defects so that the monitoring device allows remote monitoring of the fieldbus network. Diagnosis information includes the modes (normal / decoupled) of all four channel segments. This has an enormous advantage for troubleshooting, since the typically transparent coupler is invisible to the central controller and the cause of defective telegrams cannot be localized. Similar to the display, existing information about error status (error counter) or internal errors can be provided cyclically. Depending on the bus system, error diagnostics or alarm mechanisms can be implemented.

The coupler, as described above, can be used to form half-duplex fieldbus network having at least one coupler which couples two fieldbus segments. Typically, a plurality of couplers form together with a plurality of fieldbus segments a fieldbus network, typically by an alternating serial connection of couplers and fieldbus segments. The fieldbus network includes at least one master, and a plurality of slaves, each forming a participant of the fieldbus network.

According to an embodiment, the thus formed fieldbus network functions as a multifunction vehicle (WTB, PROFIBUS, and CANbus) bus, particularly for a railway vehicle, or for a train having two or more railway vehicles. Each railway vehicle can have its own multifunction vehicle bus, or a multifunction vehicle bus can extend over two or more railway vehicles of the railway train. The railway train can include at least two fieldbus segments which are coupled to each other.

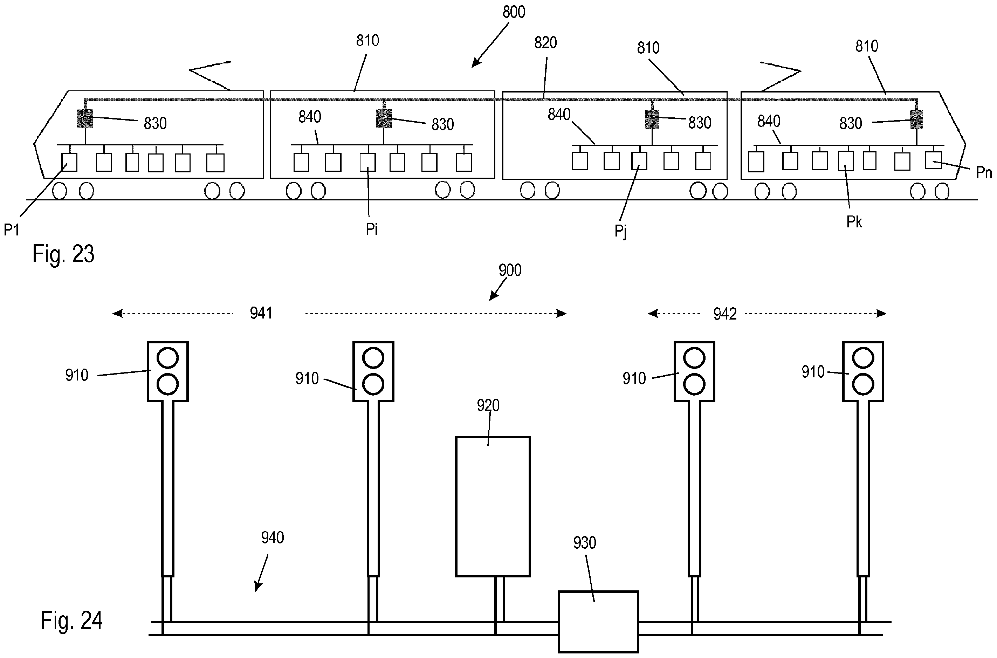

Figure 23 shows a railway train 900 having a plurality of railway vehicles 910 coupled to each other. A WTB (wire train bus) 810 extends completely through the railway train 900 and forming the backbone of the TCN (train communication network). In this embodiment, each railway vehicle 810 includes at least one node 830 which couples the WTB 820 with the MVB (Multifunction Vehicle Bus) of the respective railway vehicle 810. Participants P1 ... Pn are coupled to the respective MVB 840 of each railway vehicle 810. It is possible that to each node at least one vehicle is assigned in case the MVB extends over more than one railway vehicles 910.

Both the MVB 840 and the WTB 820 can be embodied as redundant fieldbus as described herein. The MVB 840 can include one or more fieldbus couplers as described above to couple fieldbus segments of the MVB 840. Alternatively or in addition to that, the WTB 820 can include one or more fieldbus couples to couple fieldbus segments of the WTB 820.

Figure 24 exemplarily shows a railway signal control system 900 having at least two control devices 910, typically a plurality of control devices 910. The embodiment of Figure 24 shows four control devices embodied as signal devices 910 without being limited thereto. At least one of the control devices can also be a device to control an actuator such as a point. Furthermore, another one of the control devices 910 can be a device to control a sensor. The control devices 910 are coupled to each other by a redundant fieldbus 940 as described herein. Furthermore, a signal master 930 being a fieldbus master is coupled to the fieldbus network 940 to control the control devices 910 and to receive status information from each railway signal and of each actuator and sensor if the railway signal control system 900 includes a control device to control a sensor and/or a control device to control an actuator such as a point.

The fieldbus network 940 is shown to include at least two fieldbus segments 941 and 942 which are coupled by a redundant fieldbus coupler 930 as described herein.

The present invention is not limited to the above described embodiments, but is defined by the appending claims.

<div align="center">Reference list</div>

| | |
|---|---|
| a1, b1, a2, b2, a3, b3, a4, b4 | channel segment |
| a, b | channel |
| Ca1, Ca2, Cb1, Cb2 | comparator unit |
| Cmplt_a1, Cmplt_a2, Cmplt_b1, Cmplt_b2 | complete signal |
| Cnt | counter |
| Co_CS1, Co_CS2, Co_CS3, Co_CS4 | coupler |
| Co_1, Co_2, Co_3, Co_4 | coupler |
| D_a1, D_a2, D_b1, D_b2, D_1, D_2 | decider |
| DE, DE_a1, DE_a2, DE_b1, DE_b2, DE_a, DEb | drive enable |
| M | master |
| P1, ... , Pn | participant |
| S1, S2, S3, S4 | fieldbus segment |
| R_a1, R_a2, R_b1, R_b2 | refresh circuit |
| Rx | receiver |
| Rx_a1, Rx_a2, Rx_b1, Rx_B2 | data telegram |
| SigP_a1, SigP_a2, SigP_b1, SigP_b2 | signal processing unit |
| SI | slave / device |
| Start/Stop_a1, Start/Stop_a2, Start/Stop_b1 Start/Stop_b2 | start/stop circuit |
| Sw_a1, Sw_a2, Sw_b1, Sw_b2 | switching unit |
| Swov, swov_a1, swov_a2, swov_b1, swov_b2 | switching signal |
| T_a1, T_a2, T_b1, T_b2 | transceiver unit |
| Tx_a1, Tx_a2, Tx_b1, Tx_b2 | data telegram |
| Tx | transmitter |
| 100, 200, 300, 400, 500 | coupler |
| 800 | railway train |

(continued)

| | |
|---|---|
| 810 | railway vehicle |
| 820 | WTB (Wire Train Bus) |
| 830 | node |
| 840 | MVB (Multifunction Vehicle Bus) |
| 900 | railways signalling system |
| 910 | control device / railway signal |
| 920 | signal master |
| 930 | coupler |
| 940 | fieldbus network |
| 941, 941 | fieldbus segment |

**Claims**

1. A redundant half-duplex fieldbus coupler for bi-directionally coupling of two half-duplex fieldbus segments (S1, S2) each having a first half-duplex channel segment (a1, a2) and a second half-duplex channel segment (b1, b2) redundant to one another, the fieldbus coupler comprising:

    two transceiver units (T_a1, T_b1), wherein a respective one of the two transceiver units (T_a1, T_b1) is connected with a respective one of the two channel segments (a1, b1) of one (S1) of the two fieldbus segments (S1, S2);
    two further transceiver units (T_a2, T_b2), wherein a respective one of the two further transceiver units (T_a2, T_b2) is connected with a respective one of the two channel segments (a2, b2) of the other one (S2) of the two fieldbus segments (S1, S2); and
    wherein each transceiver unit (T_a1, T_a2, T_b1, T_b2) comprises a receiver (Rx) to receive data from the channel segment (a1, b1, a2, b2) to which the respective transceiver unit (T_a1, T_a2, T_b1, T_b2) is connected and a transmitter (Tx) to transmit data to the channel segment (a1, b1, a2, b2) to which the respective transceiver unit (T_a1, T_a2, T_b1, T_b2) is connected;
    wherein the fieldbus coupler further comprises:

    a decider unit (D_a1, D_a2, D_b1, D_b2) configured to detect if any one of the two channel segments (a1, b1, a2, b2) of any one of the two fieldbus segments (S1, S2) is defective, which renders the respective fieldbus segment defective, and, if a defective fieldbus segment having a defective channel segment is detected, to cause
    that the receiver (Rx) of the transceiver unit (T_a1, T_a2, T_b1, T_b2), which is connected to the defective channel segment of the defective fieldbus segment, is decoupled from the transmitter (Tx) of the transceiver unit (T_a1, T_a2, T_b1, T_b2) which is connected to the corresponding channel segment of the other fieldbus segment, and
    that the receiver (Rx) of the transceiver unit (T_a1, T_a2, T_b1, T_b2), which is connected to the intact channel segment of the defective fieldbus segment, is coupled with the respective transmitter (Tx) of both transceiver unis (T_a1, T_a2, T_b1, T_b2) of the other fieldbus segment.

2. A redundant half-duplex fieldbus coupler according to claim 1, wherein the decider unit comprises at least one decider (D_a1, D_b1) to compare signals representing data transmission received by the respective transceiver unit (T_a1, T_b1) from the two channel segments (a1, b1) of the one fieldbus segment (S1) and at least one decider (D_a2, D_b2) to compare signals representing data transmission received by the respective transceiver unit (T_a2, T_b2) from the two channel segments (a2, b2) of the other fieldbus segment (S1).

3. A redundant half-duplex fieldbus coupler according to claim 2, wherein the decider unit comprises at least one decider (D_a1, D_b1, D_a2, D_b2) for each channel segment (a1, b1, a2, b2).

4. A redundant half-duplex fieldbus coupler according to any of the claims 2 and 3, wherein the respective decider (D_a1, D_b1, D_a2, D_b2) of a channel segment (a1, b1, a2, b2) is configured to detect the presence or absence of signals representing data transmission received from that channel segments, and to register error events if a signal is not or incompletely received from that channel segment (a1, b1, a2, b2) relative to the other channel segment of the same field bus segment.

5. A redundant half-duplex fieldbus coupler according to any of the claims 2 to 4, further comprising switching units (Sw_a1, Sw_a2, Sw_b1, Sw_b2), wherein a respective one of the switching units is connected to a respective one of the deciders (D_a1, D_b1, D_a2, D_b2).

6. A redundant half-duplex fieldbus coupler according to any of the previous claims, further comprising at least one, typically a plurality of, indicators for indicating whether a defect occurred in any one of the two channel segments (a1, b1, a2, b2) of any one of the two fieldbus segments (S1, S2).

7. A redundant half-duplex fieldbus coupler according to any of the previous claims, further comprising at least one of

a transmitting unit, particularly a fieldbus device, for transmitting one or more data telegrams on the fieldbus indicating that a defect occurred in one of the channel segments (a1, b1, a2, b2) of the fieldbus segments (S1, S2), and
an interface to an internal or integrated fieldbus device to provide diagnosis information about the operation mode of the deciders (D_a1, D_b1, D_a2, D_b2) and/or registered information of defects in one of the channel segments (a1, b1, a2, b2) of the fieldbus segments (S1, S2).

8. A half-duplex fieldbus network, comprising:

at least two half-duplex fieldbus segments (S1, S2), each comprising a first half-duplex channel segment (a1, a2) and a second half-duplex channel segment (b1, b2) redundant to one another;
at least one redundant half-duplex fieldbus coupler (100) according to any of the previous claims, connected to the fieldbus segments (S1, S2) to couple the respective channel segments (a1, b1, a2, b2) of the two fieldbus segments (S1, S2);
wherein the fieldbus coupler is configured to detect a failure condition in any of the two channel segments (a1, b1, a2, b2) of the two fieldbus segments (S1, S2) to which the fieldbus coupler is connected by comparing the signals received from both channel segments of a respective fieldbus segment, and, if a defect occurred in one of the channel segments of one of the two fieldbus segments, to switch the signal from the other channel segment of the fieldbus segment (S1, S2) in which the defect occurred to both channel segments of the other one of the fieldbus segments (S1, S2).

9. A half-duplex fieldbus network according to claim 8, further comprising a plurality of redundant half-duplex fieldbus couplers and a plurality of half-duplex fieldbus segments, each comprising a first half-duplex channel segment (a1, a2) and a second half-duplex channel segment (b1, b2) redundant to one another, wherein the redundant bi-directional half-duplex fieldbus couplers and the bi-directional half-duplex fieldbus segments are alternatingly sequentially connected.

10. A multifunction vehicle bus comprising at least one redundant half-duplex fieldbus coupler according to any one of the claims 1 to 7, or comprising a fieldbus network according to claim 8 or 9.

11. A railway vehicle (810) comprising a multifunction vehicle bus (840) according to claim 10.

12. A railway train (800) comprising at least two railway vehicles (810) according to claim 11, wherein the multifunction vehicle bus (840) of each railway vehicle (810) is coupled by a wire train bus (820) of the railway train (800).

13. A railway signal control system (900) comprising at least two control devices (910) which are connected by a fieldbus network (940) according to claim 8 or 9.

14. A method for operating a half-duplex fieldbus coupler which bi-directionally couples two half-duplex fieldbus segments (S1, S2) each having a first half-duplex channel segment (a1, a2) and a second half-duplex channel segment (b1, b2) redundant to one another, wherein the fieldbus coupler comprises

two transceiver units (T_a1, T_b1), wherein a respective one of the two transceiver units (T_a1, T_b1) is connected with a respective one of the two channel segments (a1, b1) of one (S1) of the two fieldbus segments (S1, S2);
two further transceiver units (T_a2, T_b2), wherein a respective one of the two further transceiver units (T_a2, T_b2) is connected with a respective one of the two channel segments (a2, b2) of the other one (S2) of the two fieldbus segments (S1, S2); and

wherein each transceiver unit (T_a1, T_a2, T_b1, T_b2) comprises a receiver (Rx) to receive data from the respective channel segment (a1, b1, a2, b2) to which the respective transceiver unit (T_a1, T_a2, T_b1, T_b2) is connected and a transmitter (Tx) to transmit data to the respective channel segment (a1, b1, a2, b2) to which the respective transceiver unit (T_a1, T_a2, T_b1, T_b2) is connected;

the method comprising:

monitoring the two channel segments (a1, b1, a2, b2) of any one of the two fieldbus segments (S1, S2) to identify if any of the two channel segments is defective which would therefore render the fieldbus segment defective; and

causing, if a defective fieldbus segment having a defective channel segment is identified,

decoupling the receiver (Rx) of the transceiver unit (T_a1, T_a2, T_b1, T_b2), which is connected to the defective channel segment of the defective fieldbus segment, from the transmitter (Tx) of the transceiver unit (T_a1, T_a2, T_b1, T_b2) which is connected to the corresponding channel segment of the other fieldbus segment, and

coupling the receiver (Rx) of the transceiver unit (T_a1, T_a2, T_b1, T_b2), which is connected to the intact (opposite) channel segment of the defective fieldbus segment, with the transmitter (Tx) of both transceiver unis (T_a1, T_a2, T_b1, T_b2) of the other fieldbus segment.

15. The method of claim 14, wherein monitoring the two channel segments (a1, b1, a2, b2) comprises:

comparing signals representing data transmission received by the respective transceiver unit (T_a1, T_b1) from the first and second channel segments (a1, b1) of the one fieldbus segment (S1) by at least one decider (D_a2, D_b2); and

identifying one of the first and second channel segments (a1, b1) as being defective, if no signals or significantly less signals or defective signals are received for that channel segment.

16. The method according to claim 15, wherein the coupling and decoupling of the respective receivers is performed by respective switching units which receives switching signals issued by the at least one decider.

**Patentansprüche**

1. Redundanter Halbduplex-Feldbuskoppler zur bidirektionalen Kopplung von zwei Halbduplex-Feldbussegmenten (S1, S2) mit jeweils einem ersten Halbduplex-Kanalsegment (a1, a2) und einem zweiten Halbduplex-Kanalsegment (b1, b2), die zueinander redundant sind, wobei der Feldbuskoppler aufweist:

zwei Sendeempfängereinheiten (T_a1, T_b1), wobei jeweils eine der beiden Sendeempfängereinheiten (T_a1, T_b1) mit jeweils einem der beiden Kanalsegmente (a1, b1) eines (S1) der beiden Feldbussegmente (S1, S2) verbunden ist;

zwei weitere Sendeempfängereinheiten (T_a2, T_b2), wobei jeweils eine der beiden weiteren Sendeempfängereinheiten (T_a2, T_b2) mit jeweils einem der beiden Kanalsegmente (a2, b2) des anderen (S2) der beiden Feldbussegmente (S1, S2) verbunden ist; und

wobei jede Sendeempfängereinheit (T_a1, T_a2, T_b1, T_b2) einen Empfänger (Rx) aufweist, um Daten von dem Kanalsegment (a1, b1, a2, b2) zu empfangen, mit dem die jeweilige Sendeempfängereinheit (T_a1, T_a2, T_b1, T_b2) verbunden ist, und einen Sender (Tx), um Daten an das Kanalsegment (a1, b1, a2, b2) zu senden, mit dem die jeweilige Sendeempfängereinheit (T_a1, T_a2, T_b1, T_b2) verbunden ist;

wobei der Feldbuskoppler ferner aufweist:

eine Entscheidereinheit (D_a1, D_a2, D_b1, D_b2), die so konfiguriert ist, dass sie erkennt, ob eines der beiden Kanalsegmente (a1, b1, a2, b2) eines der beiden Feldbussegmente (S1, S2) defekt ist, wodurch das jeweilige Feldbussegment defekt wird, und, wenn ein defektes Feldbussegment mit einem defekten Kanalsegment erkannt wird, bewirkt

dass der Empfänger (Rx) der Sendeempfängereinheit (T_a1, T_a2, T_b1, T_b2), der mit dem defekten Kanalsegment des defekten Feldbussegments verbunden ist, von dem Sender (Tx) der Sendeempfängereinheit (T_a1, T_a2, T_b1, T_b2), der mit dem entsprechenden Kanalsegment des anderen Feldbussegments verbunden ist, entkoppelt wird, und

dass der Empfänger (Rx) der Sendeempfängereinheit (T_a1, T_a2, T_b1, T_b2), der mit dem intakten Kanalsegment des defekten Feldbussegments verbunden ist, mit dem jeweiligen Sender (Tx) der beiden Sendeempfängereinheiten (T_a1, T_a2, T_b1, T_b2) des anderen Feldbussegments gekoppelt ist.

2.  Redundanter Halbduplex-Feldbuskoppler nach Anspruch 1, wobei die Entscheidereinheit mindestens einen Entscheider (D_a1, D_b1) zum Vergleichen von Signalen, die eine von der jeweiligen Sendeempfängereinheit (T_a1, T_b1) von den zwei Kanalsegmenten (a1, b1) des einen Feldbussegments (S1) empfangene Datenübertragung darstellen, und mindestens einen Entscheider (D_a2, D_b2) zum Vergleichen von Signalen, die eine von der jeweiligen Sendeempfängereinheit (T_a2, T_b2) von den beiden Kanalsegmenten (a2, b2) des anderen Feldbussegments (S1) empfangene Datenübertragung darstellen, aufweist.

3.  Redundanter Halbduplex-Feldbuskoppler nach Anspruch 2, wobei die Entscheidereinheit mindestens einen Entscheider (D_a1, D_b1, D_a2, D_b2) für jedes Kanalsegment (a1, b1, a2, b2) aufweist.

4.  Redundanter Halbduplex-Feldbuskoppler nach einem der Ansprüche 2 und 3, wobei der jeweilige Entscheider (D_a1, D_b1, D_a2, D_b2) eines Kanalsegments (a1, b1, a2, b2) so konfiguriert ist, dass er das Vorhandensein oder Nichtvorhandensein von Signalen erkennt, die eine von diesem Kanalsegment empfangene Datenübertragung darstellen, und dass er Fehlerereignisse registriert, wenn ein Signal von diesem Kanalsegment (a1, b1, a2, b2) relativ zu dem anderen Kanalsegment desselben Feldbussegments nicht oder unvollständig empfangen wird.

5.  Redundanter Halbduplex-Feldbuskoppler nach einem der Ansprüche 2 bis 4, der weiterhin Schalteinheiten (Sw_a1, Sw_a2, Sw_b1, Sw_b2) aufweist, wobei jeweils eine der Schalteinheiten mit jeweils einem der Entscheider (D_a1, D_b1, D_a2, D_b2) verbunden ist.

6.  Redundanter Halbduplex-Feldbuskoppler nach einem der vorhergehenden Ansprüche, weiterhin aufweisend mindestens eine, typischerweise eine Vielzahl von Anzeigen, um anzuzeigen, ob ein Defekt in einem der beiden Kanalsegmente (a1, b1, a2, b2) eines der beiden Feldbussegmente (S1, S2) aufgetreten ist.

7.  Redundanter Halbduplex-Feldbuskoppler nach einem der vorhergehenden Ansprüche, weiterhin aufweisend mindestens eines von

    einer Sendeeinheit, insbesondere eine Feldbuseinrichtung, zur Übertragung eines oder mehrerer Datentelegramme auf dem Feldbus, die anzeigen, dass in einem der Kanalsegmente (a1, b1, a2, b2) der Feldbussegmente (S1, S2) ein Fehler aufgetreten ist, und
    einer Schnittstelle zu einer internen oder integrierten Feldbuseinrichtung, um Diagnoseinformationen über den Betriebsmodus der Entscheider (D_a1, D_b1, D_a2, D_b2) und/oder registrierte Informationen über Defekte in einem der Kanalsegmente (a1, b1, a2, b2) der Feldbussegmente (S1, S2) bereitzustellen.

8.  Ein Halbduplex-Feldbusnetzwerk, aufweisend:

    mindestens zwei Halbduplex-Feldbussegmente (S1, S2), die jeweils ein erstes Halbduplex-Kanalsegment (a1, a2) und ein zweites Halbduplex-Kanalsegment (b1, b2) aufweisen, die zueinander redundant sind;
    mindestens einen redundanten Halbduplex-Feldbuskoppler (100) nach einem der vorhergehenden Ansprüche, der mit den Feldbussegmenten (S1, S2) verbunden ist, um die jeweiligen Kanalsegmente (a1, b1, a2, b2) der beiden Feldbussegmente (S1, S2) zu koppeln;
    wobei der Feldbuskoppler so konfiguriert ist, dass er einen Fehlerzustand in einem der beiden Kanalsegmente (a1, b1, a2, b2) der beiden Feldbussegmente (S1, S2), mit denen der Feldbuskoppler verbunden ist, durch Vergleichen der von beiden Kanalsegmenten eines jeweiligen Feldbussegments empfangenen Signale erkennt, und, falls ein Defekt in einem der Kanalsegmente eines der beiden Feldbussegmente aufgetreten ist, das Signal von dem anderen Kanalsegment des Feldbussegments (S1, S2), in dem der Defekt aufgetreten ist, auf beide Kanalsegmente des anderen der Feldbussegmente (S1, S2) zu schalten.

9.  Halbduplex-Feldbusnetzwerk nach Anspruch 8, das weiterhin eine Vielzahl von redundanten Halbduplex-Feldbuskoppler und eine Vielzahl von Halbduplex-Feldbussegmenten aufweist, von denen jedes ein erstes Halbduplex-Kanalsegment (a1, a2) und ein zweites Halbduplex-Kanalsegment (b1, b2) aufweist, die zueinander redundant sind, wobei die redundanten bidirektionalen Halbduplex-Feldbuskoppler und die bidirektionalen Halbduplex-Feldbussegmente abwechselnd sequentiell verbunden sind.

10. Multifunktionaler Fahrzeugbus, der mindestens einen redundanten Halbduplex-Feldbuskoppler nach einem der Ansprüche 1 bis 7 aufweist, oder der ein Feldbusnetzwerk nach Anspruch 8 oder 9 aufweist.

11. Schienenfahrzeug (810), das einen multifunktionalen Fahrzeugbus (840) nach Anspruch 10 aufweist.

12. Eisenbahnzug (800), der mindestens zwei Eisenbahnfahrzeuge (810) nach Anspruch 11 aufweist, wobei der Multifunktions-Fahrzeugbus (840) jedes Eisenbahnfahrzeugs (810) durch einen Zugbus (820) des Eisenbahnzugs (800) gekoppelt ist.

13. Eisenbahnsignalsteuerungssystem (900), das mindestens zwei Steuereinrichtungen (910) aufweist, die durch ein Feldbusnetzwerk (940) nach Anspruch 8 oder 9 verbunden sind.

14. Verfahren zum Betreiben eines Halbduplex-Feldbuskopplers, der bidirektional zwei Halbduplex-Feldbussegmente (S1, S2) koppelt, die jeweils ein erstes Halbduplex-Kanalsegment (a1, a2) und ein zweites Halbduplex-Kanalsegment (b1, b2), die redundant zueinander sind, aufweisen, wobei der Feldbuskoppler aufweist

zwei Sendeempfängereinheiten (T_a1, T_b1), wobei jeweils eine der beiden Sendeempfängereinheiten (T_a1, T_b1) mit jeweils einem der beiden Kanalsegmente (a1, b1) eines (S1) der beiden Feldbussegmente (S1, S2) verbunden ist;
zwei weitere Sendeempfängereinheiten (T_a2, T_b2), wobei jeweils eine der beiden weiteren Sendeempfängereinheiten (T_a2, T_b2) mit jeweils einem der beiden Kanalsegmente (a2, b2) des anderen (S2) der beiden Feldbussegmente (S1, S2) verbunden ist; und
wobei jede Sendeempfängereinheit (T_a1, T_a2, T_b1, T_b2) einen Empfänger (Rx) aufweist, um Daten von dem jeweiligen Kanalsegment (a1, b1, a2, b2) zu empfangen, mit dem die jeweilige Sendeempfängereinheit (T_a1, T_a2, T_b1, T_b2) verbunden ist, und einen Sender (Tx), um Daten an das jeweilige Kanalsegment (a1, b1, a2, b2) zu senden, mit dem die jeweilige Sendeempfängereinheit (T_a1, T_a2, T_b1, T_b2) verbunden ist; wobei das Verfahren aufweist:

Überwachen der beiden Kanalsegmente (a1, b1, a2, b2) eines der beiden Feldbussegmente (S1, S2), um festzustellen, ob eines der beiden Kanalsegmente defekt ist, wodurch das Feldbussegment defekt werden würde; und
Bewirken, wenn ein defektes Feldbussegment mit einem defekten Kanalsegment identifiziert wird,
Entkoppeln des Empfängers (Rx) der Sendeempfängereinheit (T_a1, T_a2, T_b1, T_b2), der mit dem defekten Kanalsegment des defekten Feldbussegments verbunden ist, von dem Sender (Tx) der Sendeempfängereinheit (T_a1, T_a2, T_b1, T_b2), der mit dem entsprechenden Kanalsegment des anderen Feldbussegments verbunden ist, und
Koppeln des Empfängers (Rx) der Sendeempfängereinheit (T_a1, T_a2, T_b1, T_b2), die mit dem intakten (anderen) Kanalsegment des defekten Feldbussegments verbunden ist, mit dem Sender (Tx) der beiden Sendeempfängereinheiten (T_a1, T_a2, T_b1, T_b2) des anderen Feldbussegments.

15. Verfahren nach Anspruch 14, wobei das Überwachen der beiden Kanalsegmente (a1, b1, a2, b2) aufweist:

Vergleichen von Signalen, die eine von der jeweiligen Sendeempfängereinheit (T_a1, T_b1) von dem ersten und zweiten Kanalsegment (a1, b1) des einen Feldbussegments (S1) empfangene Datenübertragung darstellen, durch mindestens einen Entscheider (D_a2, D_b2); und
Identifizieren eines des ersten und zweiten Kanalsegments (a1, b1) als defekt, wenn für dieses Kanalsegment keine Signale oder deutlich weniger Signale oder fehlerhafte Signale empfangen werden.

16. Verfahren nach Anspruch 15, wobei das Koppeln und Entkoppeln der jeweiligen Empfänger durch jeweilige Schalteinheiten durchgeführt wird, die von dem mindestens einen Entscheider ausgegebene Schaltsignale empfangen.

**Revendications**

1. Coupleur de bus de terrain semi-duplex redondant pour un couplage bidirectionnel de deux segments de bus de terrain semi-duplex (S1, S2) chacun ayant un premier segment de canal semi-duplex (a1, a2) et un second segment de canal semi-duplex (b1, b2) redondants l'un par rapport à l'autre, le coupleur de bus de terrain comprenant :

deux unités d'émetteur-récepteur (T_a1, T_b1), dans lequel l'une respective des deux unités d'émetteur-récepteur (T_a1, T_b1) est connectée à l'un respectif des deux segments de canal (a1, b1) de l'un (S1) des deux segments de bus de terrain (S1, S2) ;

deux autres unités d'émetteur-récepteur (T_a2, T_b2), dans lequel l'une respective des deux autres unités d'émetteur-récepteur (T_a2, T_b2) est connectée à l'un respectif des deux segments de canal (a2, b2) de l'autre (S2) des deux segments de bus de terrain (S1, S2) ; et

dans lequel chaque unité d'émetteur-récepteur (T_a1, T_a2, T_b1, T_b2) comprend un récepteur (Rx) pour recevoir des données du segment de canal (a1, b1, a2, b2) auquel l'unité d'émetteur-récepteur (T_a1, T_a2, T_b1, T_b2) respective est connectée et un transmetteur (Tx) pour transmettre des données au segment de canal (a1, b1, a2, b2) auquel l'unité d'émetteur-récepteur (T_a1, T_a2, T_b1, T_b2) respective est connectée ;

dans lequel le coupleur de bus de terrain comprend en outre :

une unité de décision (D_a1, D_a2, D_b1, D_b2) configurée pour détecter si l'un quelconque des deux segments de canal (a1, b1, a2, b2) de l'un quelconque des deux segments de bus de terrain (S1, S2) est défectueux, ce qui rend le segment de bus de terrain respectif défectueux, et, si un segment de bus de terrain défectueux ayant un segment de canal défectueux est détecté, pour amener

le récepteur (Rx) de l'unité d'émetteur-récepteur (T_a1, T_a2, T_b1, T_b2), qui est connecté au segment de canal défectueux du segment de bus de terrain défectueux, à se découpler du transmetteur (Tx) de l'unité d'émetteur-récepteur (T_a1, T_a2, T_b1, T_b2) qui est connecté au segment de canal correspondant de l'autre segment de bus de terrain, et pour amener

le récepteur (Rx) de l'unité d'émetteur-récepteur (T_a1, T_a2, T_b1, T_b2), qui est connecté au segment de canal intact du segment du bus de terrain défectueux, à se coupler au transmetteur (Tx) respectif des deux unités d'émetteur-récepteur (T_a1, T_a2, T_b1, T_b2) de l'autre segment de bus de terrain.

2. Coupleur de bus de terrain semi-duplex redondant selon la revendication 1, dans lequel l'unité de décision comprend au moins un dispositif de décision (D_a1, D_b1) pour comparer des signaux représentant une transmission de données reçue par l'unité d'émetteur-récepteur (T_a1, T_b1) respective provenant des deux segments de canal (a1, b1) de l'un segment du bus de terrain (S1) et au moins un dispositif de décision (D_a2, D_b2) pour comparer des signaux représentant une transmission de données reçue par l'unité d'émetteur-récepteur (T_a2, T_b2) respective provenant des deux segments de canal (a2, b2) de l'autre segment de bus de terrain (S1).

3. Coupleur de bus de terrain semi-duplex redondant selon la revendication 2, dans lequel l'unité de décision comprend au moins un dispositif de décision (D_a1, D_b1, D_a2, D_b2) pour chaque segment de canal (a1, b1, a2, b2).

4. Coupleur de bus de terrain semi-duplex redondant selon l'une quelconque des revendications 2 et 3, dans lequel le dispositif de décision (D_a1, D_b1, D_a2, D_b2) respectif d'un segment de canal (a1, b1, a2, b2) est configuré pour détecter la présence ou l'absence de signaux représentant une transmission de données reçues de ces segments de canal, et pour enregistrer des événements d'erreur si un signal n'est pas reçu ou est reçu de manière incomplète de ce segment de canal (a1, b1, a2, b2) par rapport à l'autre segment de canal du même segment de bus de terrain.

5. Coupleur de bus de terrain semi-duplex redondant selon l'une quelconque des revendications 2 à 4, comprenant en outre des unités de commutation (Sw_a1, Sw_a2, Sw_b1, Sw_b2), dans lequel l'une des unités de commutation respective est connectée à l'un des dispositifs de décision (D_a1, D_b1, D_a2, D_b2) respectifs.

6. Coupleur de bus de terrain semi-duplex redondant selon l'une quelconque des revendications précédentes, comprenant en outre au moins un indicateur, généralement une pluralité d'indicateurs, pour indiquer si une défaillance s'est produite dans l'un quelconque des deux segments de canal (a1, b1, a2, b2) de l'un quelconque des deux segments de bus de terrain (S1, S2).

7. Coupleur de bus de terrain semi-duplex redondant selon l'une quelconque des revendications précédentes, comprenant en outre au moins l'une parmi

une unité de transmission, en particulier un dispositif de bus de terrain, pour transmettre un ou plusieurs télégrammes de données sur le bus de terrain indiquant qu'une défaillance s'est produite dans l'un des segments de canal (a1, b1, a2, b2) des segments de bus de terrain (S1, S2), et

une interface avec un dispositif de bus de terrain interne ou intégré pour fournir des informations de diagnostic sur le mode de fonctionnement des dispositifs de décision (D_a1, D_b1, D_a2, D_b2) et/ou des informations enregistrées de défaillances dans l'un des segments de canal (a1, b1, a2, b2) des segments de bus de terrain (S1, S2).

8. Réseau de bus de terrain semi-duplex, comprenant :

au moins deux segments de bus de terrain semi-duplex (S1, S2), chacun comprenant un premier segment de canal semi-duplex (a1, a2) et un second segment de canal semi-duplex (b1, b2) redondants l'un par rapport à l'autre ;
au moins un coupleur de bus de terrain semi-duplex redondant (100) selon l'une quelconque des revendications précédentes, connecté aux segments de bus de terrain (S1, S2) pour coupler les segments de canaux (a1, b1, a2, b2) respectifs des deux segments de bus de terrain (S1, S2) ;
dans lequel le coupleur de bus de terrain est configuré pour détecter une condition d'échec dans l'un quelconque des deux segments de canal (a1, b1, a2, b2) des deux segments de bus de terrain (S1, S2) auxquels le coupleur de bus de terrain est connecté en comparant les signaux reçus des deux segments de canal d'un segment de bus de terrain respectif, et, si une défaillance s'est produite dans l'un des segments de canal de l'un des deux segments de bus de terrain, pour commuter le signal de l'autre segment de canal du segment de bus de terrain (S1, S2) dans lequel la défaillance s'est produite sur les deux segments de canal de l'autre segment de bus de terrain (S1, S2).

9. Réseau de bus de terrain semi-duplex selon la revendication 8, comprenant en outre une pluralité de coupleurs de bus de terrain semi-duplex redondants et une pluralité de segments de bus de terrain semi-duplex, chacun comprenant un premier segment de canal semi-duplex (a1, a2) et un second segment de canal semi-duplex (b1, b2) redondants l'un par rapport à l'autre, dans lequel les coupleurs de bus de terrain semi-duplex bidirectionnels redondants et les segments de bus de terrain semi-duplex bidirectionnels sont connectés alternativement de manière séquentielle.

10. Bus de véhicule multifonction comprenant au moins un coupleur de bus de terrain semi-duplex redondant selon l'une quelconque des revendications 1 à 7, ou comprenant un réseau de bus de terrain selon la revendication 8 ou 9.

11. Véhicule ferroviaire (810) comprenant un bus de véhicule multifonction (840) selon la revendication 10.

12. Train ferroviaire (800) comprenant au moins deux véhicules ferroviaires (810) selon la revendication 11, dans lequel le bus de véhicule multifonction (840) de chaque véhicule ferroviaire (810) est couplé par un bus de train filaire (820) du train ferroviaire (800).

13. Système de commande de signaux ferroviaires (900) comprenant au moins deux dispositifs de commande (910) connectés par un réseau de bus de terrain (940) selon la revendication 8 ou 9.

14. Procédé de fonctionnement d'un coupleur de bus de terrain semi-duplex qui couple de manière bidirectionnelle deux segments de bus de terrain semi-duplex (S1, S2) ayant chacun un premier segment de canal semi-duplex (a1, a2) et un second segment de canal semi-duplex (b1, b2) redondants l'un par rapport à l'autre, dans lequel le coupleur de bus de terrain comprend

deux unités d'émetteur-récepteur (T_a1, T_b1), dans lequel l'une des deux unités d'émetteur-récepteur (T_a1, T_b1) est connectée à l'un des deux segments de canal (a1, b1) respectif de l'un (S1) des deux segments de bus de terrain (S1, S2) ;
deux autres unités d'émetteur-récepteur (T_a2, T_b2), dans lequel l'une des deux autres unités d'émetteur-récepteur (T_a2, T_b2) est connectée à l'un respectif des deux segments de canal (a2, b2) de l'autre (S2) des deux segments de bus de terrain (S1, S2) ; et
dans lequel chaque unité d'émetteur-récepteur (T_a1, T_a2, T_b1, T_b2) comprend un récepteur (Rx) pour recevoir des données du segment de canal (a1, b1, a2, b2) respectif auquel l'unité d'émetteur-récepteur (T_a1, T_a2, T_b1, T_b2) respective connectée et un transmetteur (Tx) pour transmettre des données au segment de canal (a1, b1, a2, b2) respectif auquel l'unité d'émetteur-récepteur (T_a1, T_a2, T_b1, T_b2) respective est connectée ;
le procédé comprenant :

la surveillance des deux segments de canal (a1, b1, a2, b2) de l'un quelconque des deux segments de bus de terrain (S1, S2) afin d'identifier si l'un quelconque des deux segments de canal est défectueux, ce qui rendrait le segment de bus de terrain défectueux ; et
le fait d'amener, si un segment de bus de terrain défectueux comportant un segment de canal défectueux est identifié,
le récepteur (Rx) de l'unité d'émetteur-récepteur (T_a1, T_a2, T_b1, T_b2), qui est connecté au segment de canal défectueux du segment de bus de terrain défectueux, à se découpler du transmetteur (Tx) de l'unité d'émetteur-récepteur (T_a1, T_a2, T_b1, T_b2) qui est connecté au segment de canal correspondant de l'autre segment de bus de terrain, et
le récepteur (Rx) de l'unité d'émetteur-récepteur (T_a1, T_a2, T_b1, T_b2), qui est connecté au segment de canal intact (opposé) du segment de bus de terrain défectueux, à se coupler avec le transmetteur (Tx) des deux unités d'émetteur-récepteur (T_a1, T_a2, T_b1, T_b2) de l'autre segment de bus de terrain.

15. Procédé selon la revendication 14, dans lequel la surveillance des deux segments de canal (a1, b1, a2, b2) comprend :

la comparaison de signaux représentant la transmission de données reçues par l'unité d'émetteur-récepteur (T_a1, T_b1) respective provenant des premier et second segments de canal (a1, b1) du segment de bus de terrain (S1) par au moins un dispositif de décision (D_a2, D_b2) ; et
l'identification de l'un des premier et second segments de canal (a1, b1) comme étant défectueux, si aucun signal ou nettement moins de signaux ou des signaux défectueux sont reçus pour ce segment de canal.

16. Procédé selon la revendication 15, dans lequel le couplage et le découplage des récepteurs respectifs sont effectués par des unités de commutation respectives qui reçoivent des signaux de commutation émis par l'au moins un dispositif de décision.

Fig. 1A

Fig. 1B

Fig. 2A

Fig. 2B

Fig. 3

Fig. 4

Fig. 5

EP 3 822 146 B1

Fig. 6

Fig. 7

Fig. 8

Fig. 9

Fig. 10

EP 3 822 146 B1

Fig. 11

Fig. 12

Fig. 13

Fig. 14

EP 3 822 146 B1

Fig. 15

EP 3 822 146 B1

Fig. 16

Fig. 17

Fig. 18

EP 3 822 146 B1

Fig. 19

Fig. 20

Fig. 21

EP 3 822 146 B1

Fig. 22

Fig. 23

Fig. 24

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2088685 B1
- WO 2007012886 A1
- DE 20201249 U1
- EP 1089190 A2
- WO 9859464 A1
- US 7944818 B2
- EP 1067036 A1